(19) Europäisches Patentamt / European Patent Office / Office européen des brevets

(11) **EP 3 292 435 B1**

(12) **EUROPÄISCHE PATENTSCHRIFT**

(45) Veröffentlichungstag und Bekanntmachung des Hinweises auf die Patenterteilung:
**21.08.2024 Patentblatt 2024/34**

(21) Anmeldenummer: **16722626.5**

(22) Anmeldetag: **06.05.2016**

(51) Internationale Patentklassifikation (IPC):
**G02B 21/00** (2006.01) **G02B 21/36** (2006.01)
**G02B 21/06** (2006.01) **G01J 3/42** (2006.01)
**G01J 3/02** (2006.01) **G01J 3/28** (2006.01)
**G01N 21/35** (2014.01)

(52) Gemeinsame Patentklassifikation (CPC):
**G02B 21/0004; G01J 3/0205; G01J 3/2803;**
**G01J 3/42; G01N 21/35; G02B 21/0096;**
**G02B 21/06; G02B 21/361;** G01J 2003/423

(86) Internationale Anmeldenummer:
**PCT/EP2016/060230**

(87) Internationale Veröffentlichungsnummer:
**WO 2016/177897 (10.11.2016 Gazette 2016/45)**

(54) **MIKROSKOP ZUR MOLEKÜLSPEKTROSKOPISCHEN ANALYSE**

MICROSCOPE FOR MOLECULAR SPECTROSCOPIC ANALYSIS

MICROSCOPE POUR L'ANALYSE PAR SPECTROSCOPIE MOLÉCULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2015 DE 102015107148**

(43) Veröffentlichungstag der Anmeldung:
**14.03.2018 Patentblatt 2018/11**

(73) Patentinhaber: **Baden-Württemberg Stiftung gGmbH**
**70174 Stuttgart (DE)**

(72) Erfinder: **KRÖGER-LUI, Niels**
**67663 Kaiserslautern (DE)**

(74) Vertreter: **PATERIS Patentanwälte PartmbB**
**Postfach 33 07 11**
**80067 München (DE)**

(56) Entgegenhaltungen:
**JP-A- 2007 233 371** **US-A1- 2008 210 873**

- **MATTHEW R. KOLE ET AL: "Discrete Frequency Infrared Microspectroscopy and Imaging with a Tunable Quantum Cascade Laser", ANALYTICAL CHEMISTRY, vol. 84, no. 23, 4 December 2012 (2012-12-04), pages 10366 - 10372, XP055292008, ISSN: 0003-2700, DOI: 10.1021/ac302513f**
- **LOWENTHAL S ET AL: "SPECKLE REMOVAL BY A SLOWLY MOVING DIFFUSER ASSOCIATED WITH A MOTIONLESS DIFFUSER", JOURNAL OF THE OPTICAL SOCIETY OF AMERICA, AMERICAN INSTITUTE OF PHYSICS, NEW YORK; US, vol. 61, no. 7, 1 July 1971 (1971-07-01), pages 847 - 851, XP001118490, ISSN: 0093-5433, DOI: 10.1364/JOSA.61.000847**
- **FRANK FUCHS ET AL: "Imaging stand-off detection of explosives using tunable MIR quantum cascade lasers", OPTICAL SENSING II, vol. 7608, 23 January 2010 (2010-01-23), 1000 20th St. Bellingham WA 98225-6705 USA, pages 760809, XP055292034, ISSN: 0277-786X, ISBN: 978-1-62841-971-9, DOI: 10.1117/12.840464**

**Beschreibung**

**Gebiet der Erfindung**

Die Erfindung betrifft ein IR Mikroskop zur molekülspektroskopischen Analyse einer Probe, mit einem Strahlengang aufweisend mindestens einen Quantenkaskadenlaser (QCL), der eine Infrarot (IR) Strahlung in Form eines Laserstahls emittiert, einen Phasenmodulator, der zwischen dem QCL und der Probe angeordnet ist, mindestens ein optisches Element, das zwischen dem Phasenmodulator und der Probe angeordnet ist, und einen Sensor, der eine von der Probe transmittierte und/oder reflektierte IR Strahlung detektiert. Die Erfindung betrifft ferner ein Verfahren zum molekülspektroskopischen Analysieren einer Probe mit einem IR Mikroskop, umfassend die Schritte Bestrahlen der Probe mit einer Infrarot (IR) Strahlung in Form eines Laserstahls mittels eines Quantenkaskadenlasers (QCL), wobei die IR Strahlung über einen Phasenmodulator und mindestens ein optisches Element auf die Probe gelenkt wird, und Detektieren der von der Probe reflektierten und/oder transmittierten IR Strahlung.

**Hintergrund der Erfindung**

Zur zielgerichteten und erfolgreichen Behandlung von Erkrankungen ist eine zuverlässige Diagnostik häufig essentiell. Dies gilt vor allem für Erkrankungen, die nicht nur rein symptomatisch behandelt werden, sondern bei denen eine ursachenspezifische Behandlung bzw. Heilung angestrebt wird. Eine Unterscheidung von Erkrankungen alleine anhand ihrer Symptome ist häufig nicht möglich, da unterschiedliche Erkrankungen zu ähnlichen, teilweise überlagernden Symptomen führen, obwohl sie auf unterschiedliche medizinische Ursachen zurückzuführen sind. So können Veränderungen des Gewebes, die von unterschiedlichen organischen Fehlfunktionen ausgelöst werden, zu ähnlichen oder sogar identischen Symptomen führen. Für eine erfolgreiche, insbesondere ursachenspezifische, Behandlung muss diesen Unterschieden Rechnung getragen werden.

Um diesen medizinischen Anforderungen gerecht zu werden, arbeitet die Diagnostik mit Biopsien, chemisch/biochemischen Analysen oder auch endoskopischen Untersuchungen, mit deren Hilfe die einer Erkrankung zugrundeliegende Fehlfunktion identifiziert werden soll. Biopsien werden dabei traditionell zu Feinschnitten verarbeitet und die Gewebe bzw. Zellen durch geeignete Chemikalien angefärbt. Allerdings hängt die Aussagekraft derart gefärbter Feinschnitte maßgeblich von der Interaktion des Gewebes mit den Farbstoffen ab, so dass eindeutige und zuverlässige Aussagen oft durch mangelhafte Färbung erschwert werden. Zudem ist diese Vorgehensweise mit verhältnismäßig vielen Arbeitsschritten verbunden und deshalb relativ zeitaufwändig. Dadurch ist sie auch nur bedingt für die operationsbegleitende Analyse einsetzbar.

Aus diesen Gründen wurden in den letzten Jahren färbungsfreie Verfahren zur Untersuchung von Geweben und Zellen entwickelt. Hier haben sich vor allem Fourier-Transform-Infrarot (FTIR) Analysen etabliert, bei denen biologische Proben anhand ihres natürlichen IR Transmissions- oder Reflexionsspektrums analysiert werden. Dabei werden vollständige IR Spektren der Probe, entweder durch eine Punkt für Punkt Abtastung (FTIR Mapping) oder eine parallele Aufnahme mehrerer FTIR Spektren mit Hilfe eines Infrarotdetektors mit einer Fokalebenenanordnung (Focal Plane Array, FPA) (FTIR Imaging), aufgenommen. Das herkömmliche FTIR Mapping ist jedoch aufgrund der Punkt für Punkt Abtastung extrem zeitaufwändig. Durch die parallele Aufnahme mehrerer Spektren kann das Verfahren zwar beschleunigt werden, allerdings sind die hierzu notwendigen Sensoren (FPA) extrem teuer.

Als Alternative zu den etablierten FTIR Verfahren wird daher seit kürzerem die Verwendung von ein oder mehreren Quantenkaskadenlasern (QCL) diskutiert. Hierbei handelt es sich um schmalbandige Infrarot (IR) Strahler mit hoher spektraler Energiedichte, welche in der Regel IR Strahlung eines definierten schmalen Wellenlängenbereichs ausstrahlen. Modernere Geräte können aber auch über mehrere hundert Wellenlängen durchgestimmt werden und so ein breiteres IR Spektrum bedienen. Allerdings konnten auch mit diesen Geräten zuverlässige Ergebnisse bisher nur unter Verwendung kostenintensiver Halbleiterdetektoren (z.B. Quecksilber-Cadmium-Tellurit (MCT) -FPA) erzielt werden, so dass diesbezüglich kein maßgeblicher Vorteil zur herkömmlichen FTIR Technik geschaffen wurde.

Aus der Druckschrift KOLE, M et al.: Discrete Frequency Infrared Microspectroscopy and Imaging with a Tunable Quantum Cascade Laser (Anal. Chem., 84, 2012, Seiten 10366 - 10372, XP055292008) ist ein IR Mikroskop bekannt.

Aus der Druckschrift Lowenthal, S. et al: Speckle removal by a slowly moving diffuser associated with a motionless diffuser (Journal of the optical society of America, American Institue of Physics, New York; US, BD. 61, Nr. 7, 1. Juli 1971, Seiten 847 bis 851, XP001118490) ist eine Vorrichtung mit einem rotierenden und einem feststehenden Phasenmodulator bekannt.

Aus der Druckschrift Frank Fuchs et. al.: Image stand-off detection of explosives using tunable MIR quantum cascade laser (Optical Sensing II, Bd. 7608, 23. Januar 2010, Seite 750809, XP055292034, 1000 20th. St. Belligham WA 98225-6705 USA) ist eine Vorrichtung mit einem abstimmbaren Quantenkaskadenlaser zur berührungslosen Detektion von Sprengstoffen bekannt.

Aus der US 2018/210873 A1 ist eine Untersuchungseinrichtung zur zerstörungsfreien Untersuchung mittels Terahertzwellen bekannt.

Aus der JP 2007 233371 A ist eine Vorrichtung zum Beleuchten mit Laserlicht im sichtbaren Bereich bekannt.

Daher besteht ein Bedarf nach kostengünstigen und schnellen IR-Analysegeräten und Verfahren, insbesondere zur Untersuchung von biologischen Proben.

## Zusammenfassung der Erfindung

In einem ersten Aspekt betrifft die Erfindung ein IR Mikroskop zur molekülspektroskopischen Analyse einer Probe, mit einem Strahlengang aufweisend mindestens einen Quantenkaskadenlaser (QCL), der eine Infrarot (IR) Strahlung in Form eines Laserstahls emittiert, einen Phasenmodulator, der zwischen dem QCL und der Probe angeordnet ist, mindestens ein optisches Element, das zwischen dem Phasenmodulator und der Probe angeordnet ist, und einen Sensor, der eine von der Probe transmittierte und/der reflektierte IR Strahlung detektiert, dadurch gekennzeichnet, dass der Phasenmodulator eine rotierbare IR-transparente Streuscheibe oder ein rotierbarer IR Strahlung reflektierender Streuspiegel ist, wobei der Phasenmodulator während der Analyse kontinuierlich rotiert und derart im Strahlengang des IR Mikroskops angeordnet ist, dass keine am Zentrum des Phasenmodulators gestreute IR Strahlung auf die Probe trifft, wobei der Durchmesser des Laserstrahls am Punkt des Auftreffens auf den Phasenmodulator 80 % oder weniger, insbesondere 70 % oder weniger des Radius des Phasenmodulators beträgt, wobei der Phasenmodulator mit einer Rotationsrate rotiert, die mindestens 20% höher als eine Bildrate des Sensors ist, und wobei die Rotationsrate des Phasenmodulators kein ganz- oder halbzahliges Vielfaches der Bildrate des Sensors ist.

In einem zweiten Aspekt betrifft die Erfindung ein Verfahren zum molekülspektroskopischen Analysieren einer Probe mit einem IR Mikroskop, umfassend die Schritte Bestrahlen der Probe mit einer Infrarot (IR) Strahlung in Form eines Laserstahls mittels eines Quantenkaskadenlasers (QCL), wobei die IR Strahlung über einen Phasenmodulator und mindestens ein optisches Element auf die Probe gelenkt wird, und Detektieren der von der Probe reflektierten und/oder transmittierten IR Strahlung, dadurch gekennzeichnet, dass der Phasenmodulator eine rotierbare IR-transparente Streuscheibe oder ein rotierbarer IR Strahlung reflektierender Streuspiegel ist, wobei der Phasenmodulator während des Detektierens kontinuierlich rotiert wird und keine am Zentrum des Phasenmodulators gestreute IR Strahlung auf die Probe gelenkt wird, wobei der Durchmesser des Laserstrahls am Punkt des Auftreffens auf den Phasenmodulator 80 % oder weniger, insbesondere 70 % oder weniger des Radius des Phasenmodulators beträgt, und wobei der Phasenmodulator mit einer Rotationsrate rotiert, die mindestens 20% höher als eine Bildrate des Sensors is, tund wobei die Rotationsrate des Phasenmodulators kein ganz- oder halbzahliges Vielfaches der Bildrate des Sensors ist.

## Kurze Beschreibung der Figuren

Figur 1 zeigt die schematische Darstellung eines erfindungsgemäßen IR Mikroskops.

Figur 2 zeigt unterschiedliche Ausführungen des Strahlengangs eines erfindungsgemäßen IR Mikroskops unter Abbildung der IR Strahlung auf die Probe.

Figur 3 zeigt unterschiedliche Ausführungen des Strahlengangs eines erfindungsgemäßen IR Mikroskops bei einfacher (A) und vierfacher (B) Vergrößerung. Bei der Ausführung gemäß Abbildung A wird die IR Strahlung auf die Aperturblende abgebildet.

Figur 4 zeigt die Verteilung der spektralen Standardabweichung der pixelweise berechneten 0-Absorbanz-Linien aus Experiment 1 und 4. Zum Vergleich ist der Mittelwert der Standardabweichungen aller Pixel aus Phillips et al. 2013 eingezeichnet.

Figur 5 zeigt die 0-Absorbanz Linie eines zufällig ausgewählten Pixels (A), 10 zufällig ausgewählten Pixel (B), den Mittelwert von 1000 0-Absorbanz-Linien (C) und den räumlichen, quadratischen Mittelwert berechnet für die Daten (D) aus Experiment 4.

Figur 6 zeigt die pixelweise berechnete spektrale Standardabweichung (berechnet unter Verwendung des natürlichen Logarithmus) aus Experiment 5.

Figur 7 zeigt den Zusammenhang zwischen der spektralen Standardabweichung und dem Spaltenindex aus Figur 6.

Figur 8 zeigt das ungestreute Laserstrahlprofil des QCL sowie das Laserstrahlprofil nach der Streuung durch die Streuscheibe oder den Streuspiegel.

**Beschreibung der Erfindung**

In einem ersten Aspekt betrifft die Erfindung ein IR Mikroskop zur molekülspektroskopischen Analyse einer Probe, mit einem Strahlengang aufweisend mindestens einen Quantenkaskadenlaser (QCL), der eine Infrarot (IR) Strahlung emittiert, einen Phasenmodulator, der zwischen dem QCL und der Probe angeordnet ist, mindestens ein optisches Element, das zwischen dem Phasenmodulator und der Probe angeordnet ist, und einen Sensor, der eine von der Probe transmittierte und/oder reflektierte IR Strahlung detektiert. Der Phasenmodulator ist eine rotierbare IR-transparente Streuscheibe oder ein rotierbarer IR Strahlung reflektierender Streuspiegel. Indem der Phasenmodulator während der Analyse kontinuierlich rotiert und derart im Strahlengang des IR Mikroskops angeordnet ist, dass keine am Zentrum des Phasenmodulators gestreute IR Strahlung auf die Probe trifft, wird die spektrale Standardabweichung des Absorbanzspektrums jedes Pixels und damit die Messungenauigkeit signifikant reduziert. Dadurch ist es möglich molekülspektroskopische Analysen unter Verwendung von QCLs durchzuführen, die eine ähnliche Genauigkeit wie herkömmliche Fourier Transform (FT) IR basierter Systeme zeigen, aber erheblich kürzere Messzeiten haben.

Normalerweise kommt es aufgrund des hohen Kohärenzgrades des QCL zu überdurchschnittlich vielen Interferenzen, die vor allem an den optischen Elementen des Strahlengangs entstehen. Diese Interferenzen werden üblicherweise durch eine Referenzierung auf eine Leermessung rechnerisch beseitigt. Da das Interferenzmuster aber wellenlängenabhängig ist, muss diese Referenzierung für jede einzelne Wellenlänge erfolgen. Dies ist entweder möglich, indem für jede Wellenlänge eine Proben- und eine Referenzmessung erfolgt, oder indem eine Referenzmessung über den gesamten Wellenlängenbereich aufgenommen wird. Um für jede Wellenlänge jeweils eine Proben- und eine Referenzmessung durchzuführen, müsste die Probe für jede Wellenlänge aus dem Strahlengang entfernt und wieder eingesetzt werden. Hierdurch entsteht nicht nur ein hoher Zeitaufwand, sondern auch eine erhebliche Unsicherheit in der Positionierung der Probe. Eine kontinuierliche Referenzierung in der zunächst die Leermessung für alle Wellenlängen aufgenommen wird und anschließend die Messung wiederum für alle Wellenlängen erfolgt, ist hingegen aufgrund der technischen Gegebenheiten der QCL bisher nicht möglich. Die Modifizierung der Wellenlänge, bei welcher ein QCL emittiert, erfolgt in der Regel indem ein Schrittmotor die Verkippung eines Gitters in einer externen Kavität (Littrow-Konfiguration) quasi-kontinuierlich über einen ausgewählten Winkelbereich oder in diskreten Schritten verkippt. Die Stellgenauigkeit des Schrittmotors führt dabei aber zwangsläufig zu Fehlern in der Winkelposition des Gitters und somit zu einer fehlerhaften Wellenlängeneinstellung des Lasers. Daraus resultieren Variationen des Interferenzmusters, die eine rein rechnerische Beseitigung durch die Referenzierung auf eine Leermessung nicht zulassen.

Durch die Rotation des Phasenmodulators entsteht hingegen ein spezifisches Interferenz- bzw. Specklemuster, das eine Funktion der Position des Phasenmodulators ist und sich mit dessen Rotation ändert. Für jede individuelle Rotationsposition ist es hingegen konstant. Dadurch wird die räumliche Kohärenz der IR Strahlung und die daraus resultierende Interferenzeffekte, im zeitlichen Mittel signifikant reduziert, so dass eine konstante Phasenmodulation und Streuung entsteht.

Da der Phasenmodulator eine rotierbare IR-transparente Streuscheibe oder ein rotierbarer IR Strahlung reflektierender Streuspiegel ist, verteilen sich die Photonen beliebig über die verschiedenen Richtungen im Raum. Dies wird dadurch erreicht, dass Streuscheiben bzw. Streuspiegel auf der dem QCL zugewandten Seite eine aufgeraute Oberfläche haben. Es findet keine einheitliche Phasenverschiebung statt, so dass die auf die Probe auftreffende IR Strahlung keine definierte Phase aufweist. Vielmehr treffen die Strahlen der IR Strahlung mit unterschiedlich modulierten Phasen auf die Probe.

Indem außerdem das Zentrum des Phasenmodulators von der Bestrahlung ausgenommen wird, wird die gesamte auf die Probe treffende IR Strahlung von der Modulation erfasst. Würde das Zentrum der Streuscheibe, das selbst nicht rotiert (Bahngeschwindigkeit = 0), von der IR Strahlung erfasst und auf die Probe abgebildet, würden einzelne Punkte der Probe durch nicht modulierte IR Strahlung bestrahlt. An diesen Punkten würde die ursprüngliche, durch den QCL verursachte Interferenz, die Messung stören. Stattdessen liegen bei Analysen mit dem erfindungsgemäßen IR Mikroskop die 0-Absorbanz Linien für jeden Pixel nahe der absoluten 0-Linie ohne deutliche, eventuell periodische Schwankungen, wie sie sonst aufgrund der Kohärenz eines QCL beobachtet werden (Yeh et al., 2015). Insgesamt konnte ein Mittelwert für die spektrale Standardabweichung von unter 0,01 a.u. [engl. absorbance units (Absorbanzeinheiten)] erreicht werden. Diese spezifische Messgenauigkeit erlaubt die molekülspektroskopische Analyse von komplexen Proben mit geringer Absorbanz und feiner Struktur, wie beispielsweise biologischen Proben.

Darüber hinaus sind aufgrund der hohen Messgenauigkeit hyperspektrale Abbildungen einer Probe mit einer räumlichen Auflösung von unter 20 $\mu$m möglich. Dies kann mit herkömmlichen Geräten, wie beispielsweise in Phillips et al., 2013 beschrieben, nicht erreicht werden, da die verbleibenden Interferenzen und das daraus resultierende Signal-zu-Rausch Verhältnis die Registrierung geringer Absorbanzsprünge nicht zulassen. Eine hohe räumliche Auflösung ist jedoch für histopathologische Untersuchungen oft unverzichtbar. Außerdem ist die erzeugte hyperspektrale Abbildung der Probe, selbst für extrem kurze Messzeiten von ca. 20 Millisekunden, wie sie bei spontanen Aufnahmen mit fester Wellenlänge oder bei Messungen mit hoher spektraler Auflösung bei Durchstimmen der Wellenlänge verwendet werden, vom Messzeitpunkt unabhängig. Dadurch können Veränderungen der Infrarottransparenz biologischer Proben in Echtzeit mit einem räumlichen Auflösungsvermögen von weniger als 20 μm beobachtet werden.

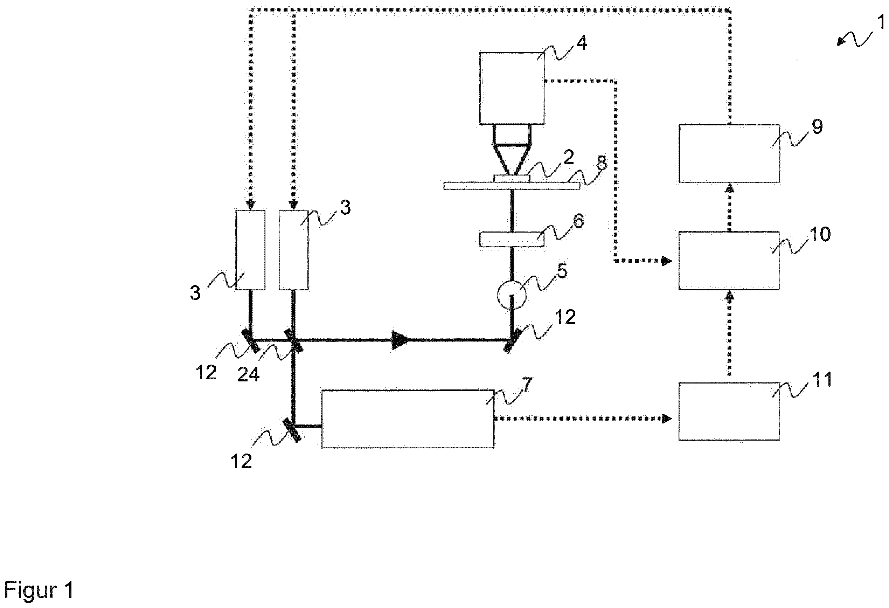

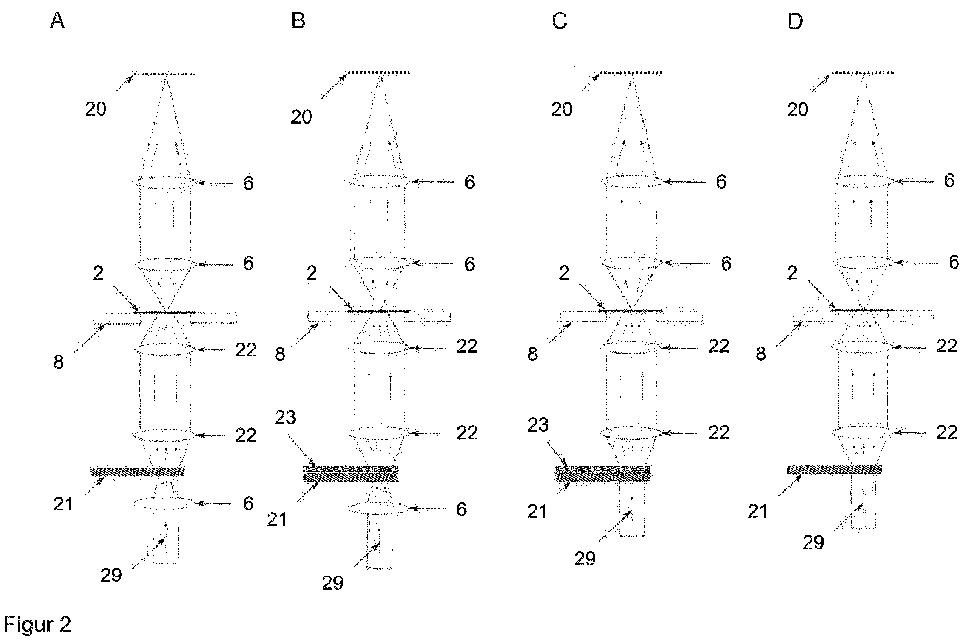

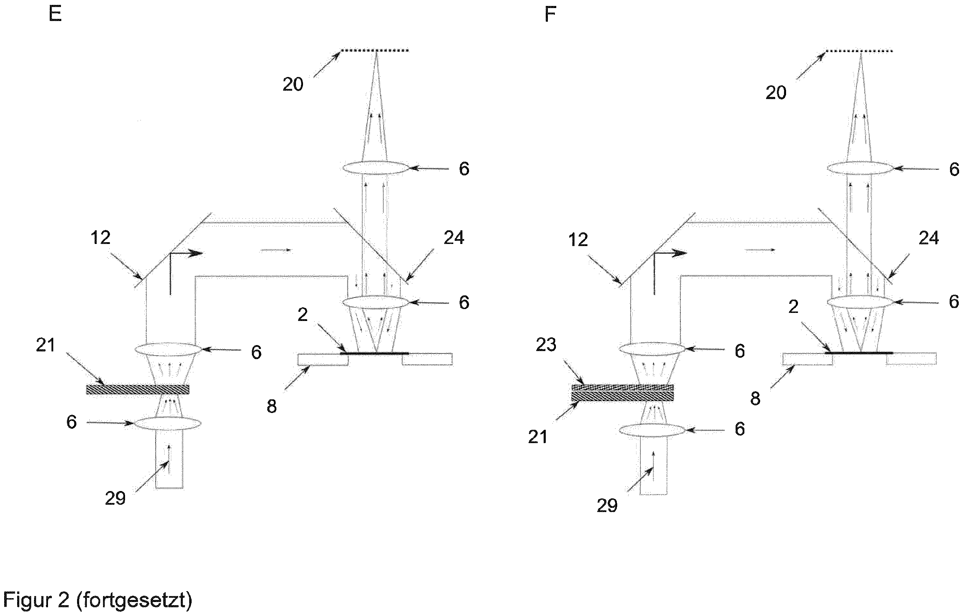

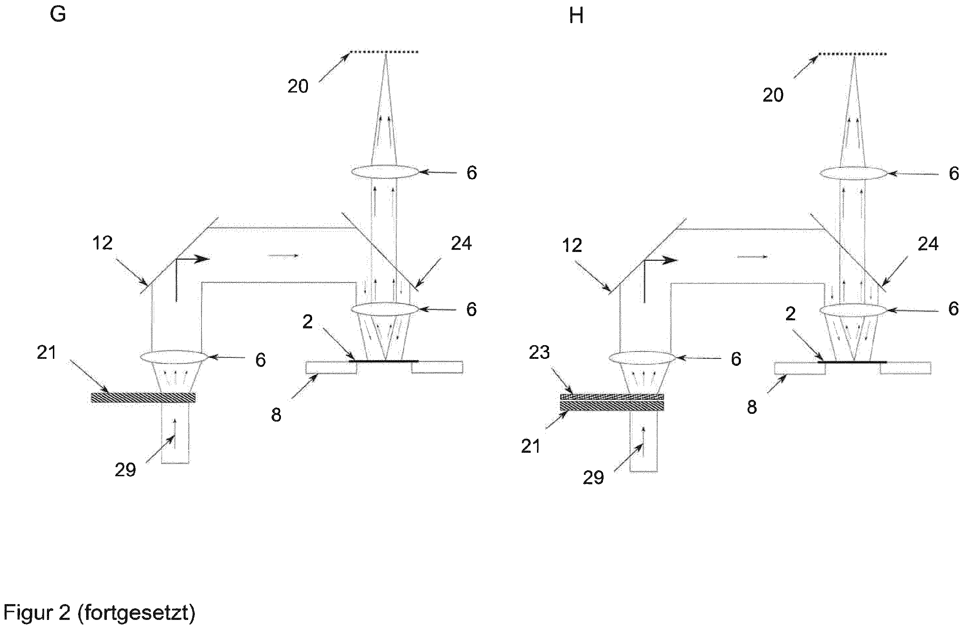

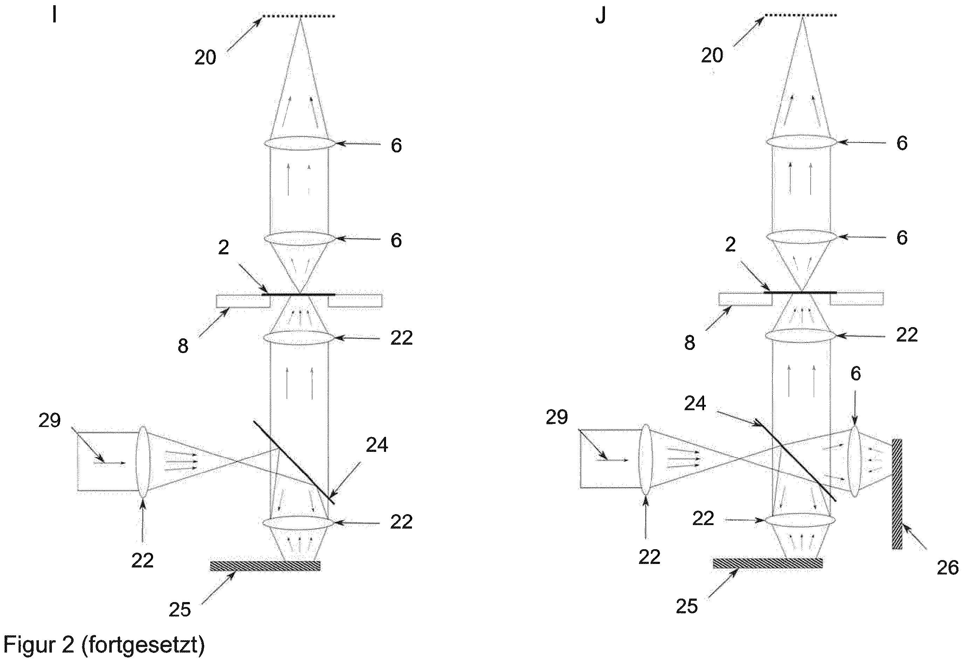

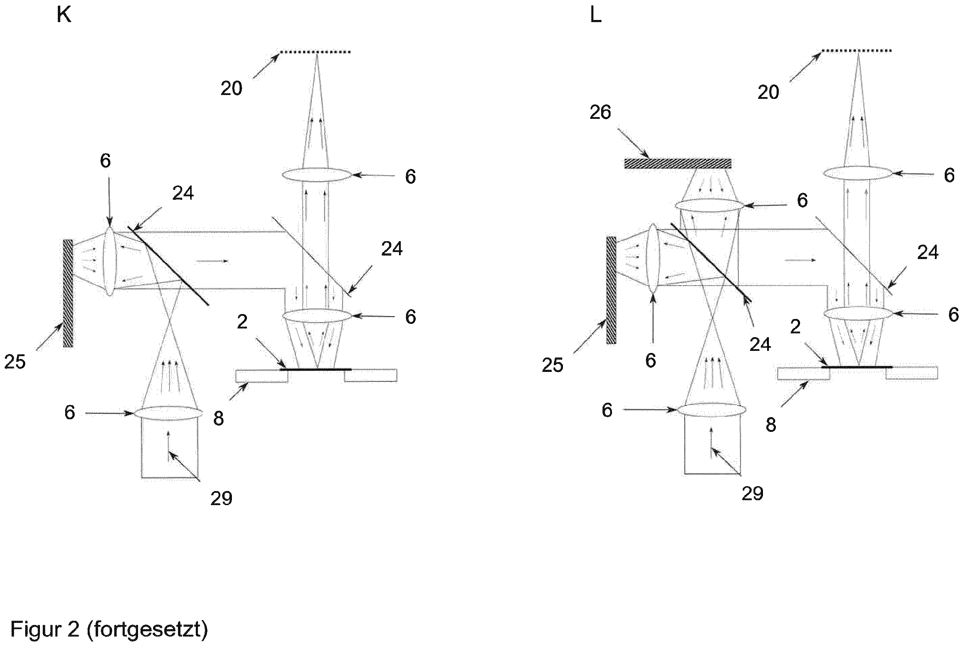

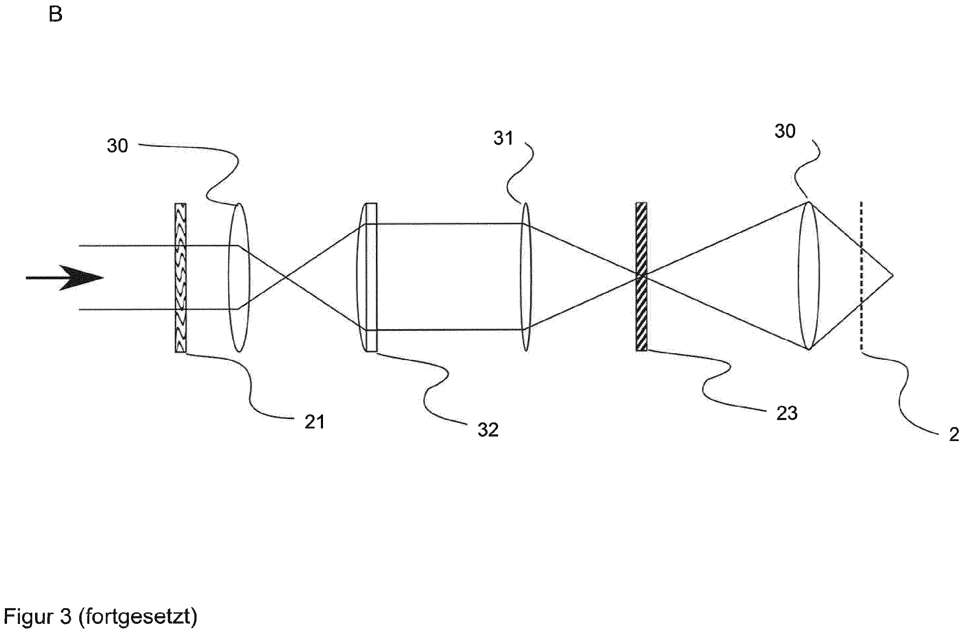

Der QCL, der Phasenmodulator, das mindestens eine optische Element und der Sensor sind hintereinander im Strahlengang des IR Mikroskops angeordnet, wobei QCL und Sensor den Anfang bzw. das Ende des Strahlengangs bilden (Figur 1, 3 B). Das mindestens eine optische Element dient vorzugsweise zur Aufweitung des Laserstrahls zur Beleuchtung der Probe. Darüber hinaus können weitere mikroskopische Elemente, insbesondere optische Elemente im Strahlengang angeordnet sein. Beispielsweise können der Phasenmodulator und die Probe soweit räumlich voneinander getrennt werden, dass der rotierende Phasenmodulator von den übrigen Komponenten des IR Mikroskops durch ein schwingungsdämpfendes Element entkoppelt werden kann. Außerdem kann das Beleuchtungsprofil an unterschiedliche mikroskopische Anforderungen, beispielsweise verschiedene Vergrößerungsstufen, angepasst werden. Je nach Aufbau des IR Mikroskops kann die Analyse zudem in Transmission, Reflektion oder Transflektion durchgeführt werden (Figur 2). Für eine Messung in Transflektion wird die Probe auf einen IR Strahlung reflektierenden Objektträger aufgebracht, so dass die durch die Probe tretende Strahlung von dem Objektträger reflektiert wird und erneut durch die Probe tritt bevor sie entsprechend einer Reflektionsmessung detektiert wird.

QCLs können die IR Strahlung entweder gepulst oder kontinuierlich emittieren. Für das erfindungsgemäße IR Mikroskop kann sowohl gepulste als auch kontinuierliche IR Strahlung verwendet werden.

Mit dem erfindungsgemäßen IR Mikroskop wird eine hohe Anzahl an Pixeln, beispielsweise etwa 300.000 Pixel, parallel gemessen (Imaging). Dadurch ist eine schnellere Probenanalyse als bei einem Punkt für Punkt Abtasten (Mapping) möglich. Für das erfindungsgemäße IR Mikroskop geeignete Sensoren wie beispielsweise Mikrobolometer erlauben derzeit die parallele Messung von etwa 1.000 bis etwa 1.300.000 Pixel, wobei größere Formate entwickelt werden.

Erfindungsgemäß beträgt der Durchmesser des Laserstrahls am Punkt des Auftreffens auf den Phasenmodulator 80 % oder weniger, bevorzugt 70 % oder weniger des Radius des Phasenmodulators. Dadurch kann der Strahl präzise auf einen Bereich außerhalb des inneren Drittels der Fläche des Phasenmodulators gerichtet werden. Beträgt der Radius des Phasenmodulators beispielsweise 25,4 mm kann ein QCL Strahl mit weniger als 10 mm Durchmesser auf den Randbereich des Phasenmodulators gerichtet werden, ohne dessen Zentrum zu beleuchten.

In einer bevorzugten Ausführungsform ist das IR Mikroskop ein Weitfeldmikroskop. In der Weitfeldmikroskopie sind die Bildausschnitte verhältnismäßig groß und enthalten viele Interferenzen. Durch den Einsatz eines rotierenden Phasenmodulators können diese Interferenzen minimiert und rechnerisch beseitigt werden.

In einer bevorzugten Ausführungsform ist die Probe eine ungefärbte Probe, bevorzugt eine ungefärbte Gewebeprobe. Das erfindungsgemäße IR Mikroskop ist insbesondere geeignet um eine Probe anhand ihrer inhärenten biochemischen Eigenschaften, nämlich anhand ihrer IR Transmission bzw. Reflexion zu untersuchen. Die IR Transmission bzw. Reflexion der Probe ist unmittelbar von ihrer biochemischen Zusammensetzung abhängig, so dass eine Anfärbung der Probe, beispielsweise durch Zellfarbstoffe oder Antikörper, nicht notwendig ist. Dadurch können wesentliche Arbeitsschritte und somit Zeit eingespart werden. Dies ist vor allem bei operationsbegleitenden Analysen wichtig, da die Operation nach Möglichkeit nicht durch externe Arbeitsschritte in die Länge gezogen werden sollte.

Um zu erreichen, dass keine am Zentrum des Phasenmodulators gestreute IR Strahlung auf die Probe trifft, kann das IR Mikroskop bzw. dessen Strahlengang auf verschiedene Weisen angepasst werden. In einer bevorzugten Ausführungsform ist der Phasenmodulator derart im Strahlengang des IR Mikroskops angeordnet ist, dass das Zentrum des Phasenmodulators von der IR Strahlung nicht erfasst wird. Dadurch entsteht keine am Zentrum des Phasenmodulators gestreute IR Strahlung.

In einer weiteren Ausführungsform weist der Strahlengang eine Abdeckung auf, die hinter dem Zentrum des Phasenmodulators und vor der Probe angeordnet ist, wobei die Abdeckung die am Zentrum des Phasenmodulators gestreute IR Strahlung blockiert.

In einer weiteren Ausführungsform weist der Strahlengang eine Linsenanordnung auf, die zwischen dem Phasenmodulator und der Probe angeordnet ist, wobei die Linsenanordnung nur die außerhalb des Zentrums des Phasenmodulators gestreute IR Strahlung auf die Probe lenkt.

In einer bevorzugten Ausführungsform trifft keine im inneren Drittel der Fläche des Phasenmodulators gestreute IR Strahlung auf die Probe. Dazu wird vorzugsweise nur ein Bereich außerhalb des inneren Drittels der Fläche des Phasenmodulators von der IR Strahlung erfasst. Im Zentrum des Phasenmodulators ist die Bahngeschwindigkeit gleich 0, so dass im Drehpunkt (Zentrum) des Phasenmodulators keine Phasenmodulation statt findet. Nach außen nimmt die Bahngeschwindigkeit kontinuierlich zu. Dementsprechend kommt es nahe dem Zentrum lediglich zu einer langsamen Phasenmodulation, im Randbereich des Phasenmodulators, wo die Bahngeschwindigkeit am höchsten ist, hingegen zu einer entsprechend schnelleren Phasenmodulation. In einer besonders bevorzugten Ausführungsform trifft nur eine im äußeren Drittel der Fläche des Phasenmodulators gestreute IR Strahlung auf die Probe. Dazu wird vorzugsweise nur ein Bereich außerhalb der inneren zwei Drittel der Fläche des Phasenmodulators von der IR Strahlung erfasst.

In einer bevorzugten Ausführungsform trifft keine in einem Bereich von mindestens 1 mm, bevorzugt mindestens 2 mm, ferner bevorzugt mindestens 5 mm, ferner bevorzugt mindestens 10 mm, ferner bevorzugt mindestens 20 mm um das Zentrum des Phasenmodulators herum gestreute IR Strahlung auf die Probe. Dies wird vorzugsweise erreicht, dass nur ein Bereich außerhalb von mindestens 1 mm, bevorzugt mindestens 2 mm, ferner bevorzugt mindestens 5 mm, ferner bevorzugt mindestens 10 mm, ferner bevorzugt mindestens 20 mm um das Zentrum des Phasenmodulators herum von der IR Strahlung erfasst wird. Bei Beleuchtung des Phasenmodulators mit einem gaußförmigen Infrarotstrahl ist es bevorzugt, dass das Strahlzentrum des Infrarotstrahls in einem Bereich außerhalb von mindestens 1 mm, bevorzugt mindestens 2 mm, ferner bevorzugt mindestens 5 mm, ferner bevorzugt mindestens 10 mm, ferner bevorzugt mindestens 20 mm um das Zentrum des Phasenmodulators herum auf den Phasenmodulator trifft. Nahe dem Zentrum des Phasenmodulators kommt es lediglich zu einer langsamen Phasenmodulation. Bei zunehmender Entfernung vom Zentrum des Phasenmodulators steigt die Bahngeschwindigkeit und es kommt zu einer entsprechend schnelleren Phasenmodulation.

In einer bevorzugten Ausführungsform emittiert der QCL die IR Strahlung in Form eines Laserstrahls dessen Durchmesser, am Punkt des Auftreffens auf den Phasenmodulator, kleiner ist als der Radius des Phasenmodulators. Dadurch kann der Laserstrahl gezielt auf einen Bereich jenseits des Zentrums des Phasenmodulators gerichtet, und dennoch vollständig vom Phasenmodulator auf die Probe abgebildet werden. Hierzu kann beispielsweise ein Phasenmodulator eingesetzt werden, der einen entsprechend größeren Durchmesser als der Laserstrahl hat. Alternativ kann der QCL-Strahl durch optische Elemente auf den Phasenmodulator fokussiert werden, so dass er am Ort des Phasenmodulators einen entsprechend kleinen Durchmesser besitzt.

In einer bevorzugten Ausführungsform weist das IR Mikroskop mindestens zwei, bevorzugt drei, ferner bevorzugt vier QCL auf. QCL sind Halbleiterlaser, welche mittlere oder ferne Infrarotstrahlung erzeugen. Die Strahlung kann entweder auf einen definierten Frequenzbereich, von regelmäßig 1 - 2 cm$^{-1}$ festgelegt sein, oder durch durchstimmen (englisch: tuning) geändert werden. Zum Durchstimmen sind vor allem QCL in einer externen Kavität (englisch: external cavity quantum cascade laser (EC-QCL)) geeignet, die in der Regel einen Spektralbereich mit mehreren 100 cm$^{-1}$ Breite abdecken. Mit diesen QCL können größere Teile des IR-Spektrums aufgenommen werden. Je nach Art der molekülspektroskopischen Analyse können ein oder mehrere QCL zum Einsatz kommen. Unter Umständen kann für die Analyse biologischer Proben bereits die Aufnahme einiger weniger, beispielsweise lediglich zwei, unterschiedlicher Wellenlängen ausreichen. Je nach Bandbreite können hierzu ein oder zwei QCL eingesetzt werden, wodurch eine verhältnismäßig schnelle Messung erfolgen kann. Soll hingegen ein breiterer Spektralbereich abgedeckt werden, können ein oder mehrere durchstimmbare QCL sequentiell zum Einsatz kommen.

In einer bevorzugten Ausführungsform ist der QCL ein QCL in einer externen Kavität (EC-QCL). Diese QCL zeichnen sich durch eine hohe Brillanz und eine hohe spektrale Energiedichte aus. Ferner sind sie über einen verhältnismäßig breiten Wellenlängenbereich durchstimmbar. EC-QCL sind somit vor allem für die Aufnahme breiterer IR Spektren bevorzugt und erlauben eine schnelle verhältnismäßig hochauflösende IR Messung.

In einer bevorzugten Ausführungsform wird der QCL während der Analyse kontinuierlich durchgestimmt. Der erfindungsgemäße Einsatz eines Phasenmodulators erlaubt es, die Referenzmessung und die Messung der Probe für den gesamten aufzunehmenden Wellenlängenbereich getrennt zu erfassen. Es ist somit die Aufnahme eines kontinuierlichen Ausschnitts des IR Spektrums für die Referenz einerseits und die Probe andererseits möglich. Dies ist insbesondere vorteilhaft, wenn größere Bereiche des Spektrums aufgenommen werden sollen, um detaillierte Informationen über die chemische und biologische Zusammensetzung des Gewebes zu erhalten.

In einer bevorzugten Ausführungsform wird der QCL während der Analyse mit einer Geschwindigkeit von 5 cm$^{-1}$/s bis 30 cm$^{-1}$/s, bevorzugt mit einer Geschwindigkeit von 10 cm$^{-1}$/s bis 20 cm$^{-1}$/s, ferner bevorzugt mit einer Geschwindigkeit von etwa 10 cm$^{-1}$/s durchgestimmt. Die Durchstimmung sollte so schnell wie nötig und so langsam wie möglich erfolgen, um ein störungsfreies Ergebnis zu erhalten. Dabei richtet sich die Minimalgeschwindigkeit nach der gewünschten spektralen Auflösung. Will man beispielsweise eine Auflösung von vier Wellenzahlen erhalten, benötigt man alle zwei Wellenzahlen einen unabhängigen Messpunkt. Bei einer Durchstimmgeschwindigkeit von 10 Wellenzahlen pro Sekunde bedeutet dies, dass alle 0,2 Sekunden ein unabhängiger Messpunkt erfasst wird. In Abhängigkeit von der Geschwindigkeit des Sensors kann dies für eine spektroskopische Wiedergabe der Probe bereits ausreichend sein. Beispielsweise kann eine Mikrobolometerkamera mit 50 Hz Bildrate 10 Bilder in 0,2 Sekunden aufnehmen. Über diese kann das Ergebnis anschließend gemittelt werden. Bei Kameras mit einer Bildrate von lediglich 5 Hz könnte hingegen in 0,2 Sekunden nur ein einziges Bild aufgenommen werden, so dass sich hier eine geringere Durchstimmgeschwindigkeit empfiehlt. Im Gegensatz dazu liegen die Bildraten von MCT-FPA Detektoren im Bereich von Kilohertz, so dass in diesem Fall die Rotationsgeschwindigkeit des Phasenmodulators die maximale Durchstimmgeschwindigkeit bestimmt. Um ein im zeitlichen Mittel unabhängiges Beleuchtungsprofil zu erhalten, muss für jede Messung mindestens eine Umdrehung des Phasenmodulators durchgeführt werden. Bei einer Drehrate von beispielsweise 1000 Hz kann theoretisch also jede Millisekunde ein neuer, unabhängiger Messpunkt erfasst werden, vorausgesetzt dass die Bildrate des Detektors dies zulässt. Soll nun alle zwei Wellenzahlen ein unabhängiger Messpunkt generiert werden, kann der Laser mit zwei Wellenzahlen pro Millisekunde bzw. 2000 Wellenzahlen pro Sekunde durchgestimmt werden.

In einer bevorzugten Ausführungsform liegt die von dem QCL emittierte IR Strahlung in einem Bereich von 5 bis 12,5 μm. Dies entspricht einer Wellenzahl von 800 bis 2000 cm$^{-1}$ und deckt jenen Spektralbereich der IR Strahlung ab, in dem die überwiegende biologische Information enthalten ist. Zusätzlich können Lipide im Wellenlängenbereich von ca. 2,7 bis 3,7 µm (entspricht ca. 3000 Wellenzahlen) detektiert werden. Die Messung kann beispielsweise anhand einzelner festgelegter Lasermodule erfolgen, wobei bereits die Messung von zwei unabhängigen Wellenlängen für eine detaillierte Wiedergabe einer Gewebeprobe ausreichend sein kann. Derartige Messungen können je nach Wellenlänge mit einem oder zwei herkömmlichen QCL erfolgen und sind somit besonders kostengünstig. Auch mit durchstimmbaren Lasern kann bei einzelnen ausgewählten Wellenlängen gemessen werden, wobei sich die Anzahl der aufzunehmenden Bilder im Verhältnis zu einem breiteren Spektrum stark verringert und die Analyse entsprechend beschleunigt wird.

In einer bevorzugten Ausführungsform ist der Sensor ein thermischer Sensor, bevorzugt ein Mikrobolometer. Durch den erfindungsgemäßen Einsatz eines Phasenmodulators in einem IR Mikroskop ist es möglich einen QCL unabhängig von der Detektionsgeschwindigkeit und Sensitivität des verwendeten Sensors einzusetzen. Um die Messungenauigkeiten, die durch die Kohärenz der QCLs entstehen, zu reduzieren wurde bisher mit hochsensiblen und schnellen Stickstoff gekühlten MCF-FPAs gearbeitet. Diese sind jedoch sehr teuer. Zudem können die systematischen Messfehler bei Verwendung eines QCL auch durch MCF-FPAs nicht vollständig korrigiert werden, so dass die 0-Absorbanz Linien einzelner Pixel stark um die absolute 0-Linie schwanken (Yeh et al., 2015). Unter Verwendung eines rotierenden Phasenmodulators, wobei das Zentrum des Phasenmodulators von der Beleuchtung durch den QCL ausgenommen ist, können hingegen sogar mit relativ langsamen thermischen Detektoren (z.B. mit Zeitkonstanten von über 5 Mikrosekunden) hochspezifische Messungen durchgeführt werden.

Als thermische Sensoren kommen insbesondere pyroelektrische Detektoren und Mikrobolometer in Frage, die für herkömmliche FT-IR Messungen aufgrund ihrer geringen Geschwindigkeit nicht eingesetzt werden können. Insbesondere ist die Verwendung von ungekühlten Mikrobolometern möglich, wobei Mikrobolometer in Form eines sogenannten "focal plane array" (FPA) bevorzugt sind. Mikrobolometer FPA-Detektoren sind sowohl in der Anschaffung als auch im Betrieb verhältnismäßig kostengünstig, da sie keine energieaufwändige Kühlung bzw. keine Vakuumpumpe zur Wartung benötigen. Allerdings zeigen sie einige Nachteile, die ihren Einsatz zu molekülspektroskopischen Analysen, insbesondere unter Verwendung von QCLs bisher verhinderte. Mikrobolometer FPA-Detektoren messen die einfallende IR Strahlung über eine Erwärmung der Pixel, welche mit einer Änderung des elektrischen Widerstands einhergeht. Im Vergleich zu MCT-FPA Detektoren sind sie mit Zeitkonstanten im Bereich von 7 bis 10 Millisekunden, verhältnismäßig träge. Daher sind selbst schnelle Mikrobolometer FPA bisher in der Regel auf 50 Hz limitiert. Zudem können die Pixel in kommerziellen Mikrobolometern nicht unmittelbar ausgelöst werden, weshalb Bildaufnahmen bei Mikrobolometer FPA Detektoren mit 50 Hz Bildrate gegebenenfalls um 2 bis 5 Millisekunden zum "Sollakquisitionszeitpunkt" verzögert aufgenommen werden. Diese minimale Verzögerung genügt allerdings, um die Abfolge der Interferenzbilder beim phasenkontinuierlichen Durchstimmen eines QCL so zu verändern, dass eine herkömmliche rechnerische Korrektur der Interferenzen durch Referenzierung auf eine einzige Leermessung fehlerhaft wäre. Dies ist bei dem erfindungsgemäßen Einsatz eines Phasenmodulators nicht der Fall. Zudem erlaubt es der erfindungsgemäße IR Mikroskopaufbau die verhältnismäßig große Fläche eines Mikrobolometer FPA vollständig zu nutzen. Dazu ist es notwendig die Fläche des Mikrobolometer FPA, welche mehr als 100 mm$^2$ betragen kann, vollständig homogen auszuleuchten. Dies ist aufgrund der starken Interferenzen, die bei der Verwendung von QCL auftreten, ohne Phasenmodulator nicht möglich. Darüber hinaus trägt die durch den Einsatz der QCL und der Phasenmodulation verkürzte Messzeit maßgeblich zum erfolgreichen Einsatz von Mikrobolometer FPA-Detektoren bei. Dadurch dass die Detektoren ungekühlt sind, kann ihre Abwärme in der zu untersuchenden Probe reflektiert und von dem Sensor als Signal wahrgenommen werden (sogenannter Narzissus-Effekt). Schwankungen der Temperatur des Sensors während der Aufnahme können jedoch nur begrenzt rechnerisch beseitigt werden, so dass Fehler mit der Länge der Messzeit zunehmen.

In einer bevorzugten Ausführungsform weist das Mikrobolometer eine Bildrate von 30 bis 60 Hz, bevorzugt von 40 bis 60 Hz, ferner bevorzugt von etwa 50 Hz auf. Die thermische Zeitkonstante von herkömmlichen Bolometerpixelelementen liegt bei ca. 7 bis 10 Millisekunden. Damit sind Bildraten von etwa 30 bis 50 Hz möglich. Diese sind ohne weiteres geeignet eine detailgetreue und zuverlässige Wiedergabe der Probe zu gewährleisten.

In einer bevorzugten Ausführungsform steht die Flächennormale des Phasenmodulators parallel zur Rotationsachse. Dadurch wird verhindert, dass ein von der Drehphase abhängiger Strahlversatz entsteht, der die Referenz- und Probenmessung unterschiedlich beeinflusst und zu Messungenauigkeiten führt. Dies ist insbesondere bei relativ langsamen Drehraten des Phasenmodulators von Vorteil.

Der Phasenmodulator ist eine rotierbare IR-transparente Streuscheibe oder ein rotierbarer IR Strahlung reflektierender Streuspiegel. In Abhängigkeit davon, ob für den erfindungsgemäßen IR Mikroskopaufbau eine Streuscheibe oder ein Streuspiegel verwendet wird, unterscheidet sich der Strahlengang des IR Mikroskops. So fällt die IR Strahlung des QCL durch die Streuscheibe und das mindestens eine optische Element auf die Probe, wohingegen ein Streuspiegel die Strahlung des QCL reflektiert, und diese dann über mindestens ein optisches Element auf die Probe gelenkt wird. IR transparente Streuscheiben bestehen vorzugsweise aus Silizium, Germanium, KRS6 Thallium Bromo-Chlorid, Infrarotstrahlung durchlassendes amorphes Material (AMTIR), Bariumfluorid, Kalziumfluorid, Silberhalogenid (Silberbromid, Silberchlorid), Zinkselenid, Zinksulfid, Diamant oder Kaliumbromid. An der Oberfläche dieser Materialien kann z.B. durch Photolithographie oder isotropes Nassätzen eine feine, homogene Struktur gebildet werden, so dass die Streuung an dem Phasenmodulator in jedem Pixel des Bildfeldes über einen festen Zeitraum im Mittel gleich ausfällt. Dadurch wird die Varianz zwischen den Messungen reduziert. Als IR Strahlung reflektierende Streuspiegel kommen sowohl Goldspiegel, welche vor allem für die mittlere Infrarotstrahlung bevorzugt sind, als auch Silberspiegel in Frage. Darüber hinaus können auch Materialien mit besonders hohem Brechungsindex wie beispielsweise Silizium oder Germanium eingesetzt werden.

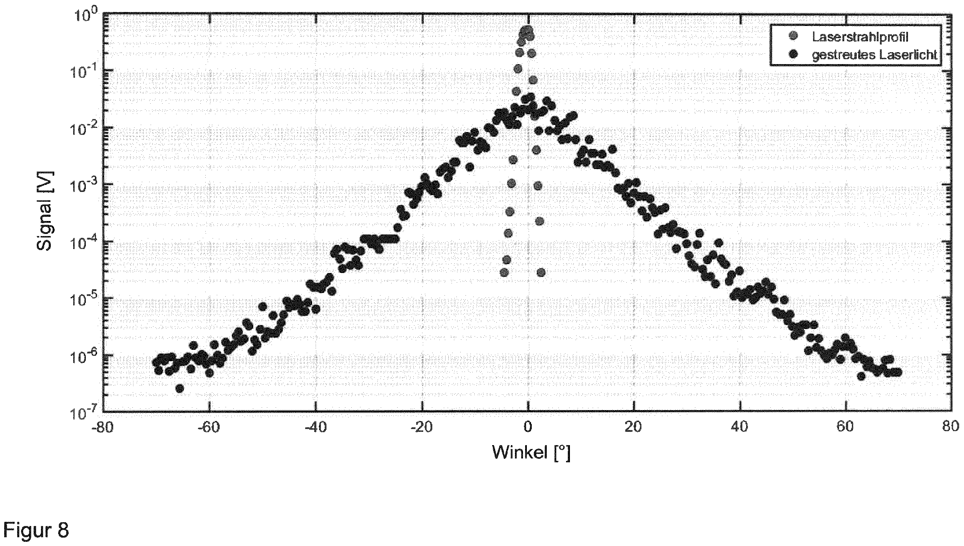

In einer bevorzugten Ausführungsform ist die Breite der Winkelverteilung der durch die Streuscheibe transmittierten bzw. an dem Streuspiegel reflektierten IR Strahlung mindestens 1°, bevorzugt mindestens 2°, ferner bevorzugt mindestens 5°, ferner bevorzugt mindestens 8°, ferner bevorzugt mindestens 10°, ferner bevorzugt mindestens 12°, ferner bevorzugt mindestens 15°. Die Winkelverteilung beschreibt die Verteilung der Strahlung über die verschiedenen Richtungen im Raum. Die Winkelverteilung der IR Strahlung wird durch die Streuscheibe bzw. den Streuspiegel verändert (Figur 8). Bevor die IR Strahlung des QCL auf die Streuscheibe bzw. den Streuspiegel trifft, weist sie eine schmale Winkelverteilung auf (Laserstrahlprofil in Figur 8). Durch die Streuscheibe bzw. den Streuspiegel findet eine Streuung statt, durch die sich die Winkelverteilung der IR Strahlung verbreitert (gestreutes Laserlicht in Figur 8). Durch eine große Breite der Winkelverteilung der durch die Streuscheibe transmittierten bzw. an dem Streuspiegel reflektierten IR Strahlung wird eine chaotische Phasenmodulation erreicht.

In einer bevorzugten Ausführungsform ist die Streuscheibe eine aufgeraute Siliziumscheibe.

In einer bevorzugten Ausführungsform weist der Phasenmodulator auf der dem QCL zugewandten Seite eine strukturierte Oberfläche auf. Durch die Strukturierung der Oberfläche, welche zum QCL hin orientiert ist, wird sichergestellt, dass der Laserstrahl nicht unmittelbar reflektiert wird, und so die Laserquelle beschädigen könnte. Eine strukturierte Oberfläche lässt sich beispielsweise durch Sandstrahlen oder chemisches Ätzen herstellen. Eine derartige Behandlung ist in der Regel ausreichend, um den Schutz der Laserquelle zu gewährleisten, insbesondere wenn die Distanz zwischen Laserstrahlaustritt und Streuscheibe mindestens 1 m beträgt.

In einer bevorzugten Ausführungsform ist der Phasenmodulator in einem Winkel von mindestens 0,5° zur Strahlung des QCL positioniert. Um eine Reflexion des QCL auf die Strahlungsquelle zu vermeiden, kann der Phasenmodulator in eine im Verhältnis zum Laserstrahl schräge Position gebracht werden. Die schräge Anordnung kann anstatt oder in Kombination mit der Strukturierung der Oberfläche des Phasenmodulators eingesetzt werden. Alternativ hierzu kann aber auch ein Faradayisolator verwendet werden, um die Strahlungsquelle zu schützen.

In einer bevorzugten Ausführungsform rotiert der Phasenmodulator mit einer Rate, die mindestens 5%, bevorzugt mindestens 8% höher als eine Bildrate des Sensors ist. Die Erfinder haben festgestellt, dass sich die spektrale Standardabweichung des Absorbanzspektrums jedes Pixels noch weiter reduzieren und damit die Messgenauigkeit noch weiter steigern lässt, indem der Phasenmodulator kontinuierlich mit einer Rate rotiert, die mindestens 5% höher als die Bildrate des Sensors ist. Durch die im Vergleich zur Bildrate des Sensors höhere Rotationsrate des Phasenmodulators wird zugleich die Reduzierung der räumlichen Kohärenz der IR Strahlung im zeitlichen Mittel besonders schnell erreicht. Insgesamt wird damit eine hohe Messgenauigkeit bei kurzen Messzeiten ermöglicht. Dies ist insbesondere für operationsbegleitende Analysen von biologischen Proben entscheidend.

Beispielsweise nimmt ein Sensor mit einer Bildrate von 50 Hz 10 Bilder in 0,2 Sekunden auf. Über diese kann das Ergebnis anschließend gemittelt werden. Bei einer Bildrate des Sensors von 50 Hz ist die Rotationsrate des Phasenmodulators mindestens 52,5 Hz. Bei einem Sensor mit einer Bildrate von 5 Hz wird in 0,2 Sekunden nur ein einziges Bild aufgenommen. In diesem Fall ist die Rate, mit der der Phasenmodulator rotiert, mindestens 5,25 Hz.

In einer besonders bevorzugten Ausführungsform rotiert der Phasenmodulator mit einer Rate, die mindestens 15%, bevorzugt mindestens 20% höher als die Bildrate des Sensors ist. Dadurch wird die Messungenauigkeit noch weiter reduziert. Beispielsweise haben die Erfinder bei einer Bildrate des Sensors von 50 Hz und einer Rotationsrate des Phasenmodulators von 60 Hz eine deutliche Reduktion der spektralen Standardabweichung des Absorbanzspektrums jedes Pixels erzielt. Auch eine Rotationsrate des Phasenmodulators von 62,5 Hz bei einer Bildrate des Sensors von 50 Hz lieferte sehr genaue Messergebnisse.

In einer bevorzugten Ausführungsform rotiert der Phasenmodulator mit einer Rate von mindestens 10 Hz, bevorzugt mindestens 20 Hz, ferner bevorzugt mindestens 30 Hz, ferner bevorzugt mindestens 50 Hz, ferner bevorzugt mit 50 bis 200 Hz. Um eine minimale Messzeit zu erhalten, sollten die Phasenmodulation und Streuung über einen Messpunkt hinweg möglichst konstant sein. Dadurch wird vermieden, dass für jede Wellenlänge mehrere Messungen durchgeführt und integriert werden müssen, wodurch die Messzeit insgesamt deutlich erhöht würde. Um eine über den Messpunkt hinweg ausreichend konstante Phasenmodulation zu erhalten ist mindestens eine vollständige Umdrehung des Phasenmodulators während eines Messpunktes notwendig. Der Aufbau des IR Mikroskops ermöglicht beispielsweise die Verwendung von Phasenmodulatoren mit Durchmessern von bis zu zwei Zoll und Rotationsgeschwindigkeiten von bis zu 200 Hz. Je nach Größe des Phasenmodulators lassen sich auch mit geringeren Rotationsraten ausreichend hohe Bahngeschwindigkeiten im Randbereich des Phasenmodulators erzielen, um die räumliche Kohärenz im zeitlichen Mittel zu minimieren. Für die Erzeugung eines besonders homogenen und störungsfreien hyperspektralen Bildes haben sich Bahngeschwindigkeiten von 5 bis 35 m/s als besonders vorteilhaft erwiesen. Drehraten zwischen 50 und 100 Hz waren ausreichend, um bei Durchstimmgeschwindigkeiten von bis zu 30 cm$^{-1}$ pro Sekunde und einer spektralen Auf-

lösung von 2 cm$^{-1}$ zu messen (ca. 30 Millisekunden pro unabhängigen Messpunkt). In einer besonders bevorzugten Ausführungsform rotiert der Phasenmodulator daher mit einer Rate von 50 bis 100 Hz. Wird der QCL beispielsweise mit 10 cm$^{-1}$ pro Sekunde durchgestimmt und soll alle 1 cm$^{-1}$ ein unabhängiger Messpunkt zur Verfügung stehen, so muss die Phasenmodulation und Streuung im Mittel über zeitliche Intervalle von 0,1 Sekunden vergleichbar sein. Bei einer Drehrate von 50 Hz entspricht das fünf Umdrehungen des Phasenmodulators, wodurch präzise Messungen möglich sind.

In einer weiteren Ausführungsform rotiert der Phasenmodulator mit einer Rate von mindestens 52,5 Hz, bevorzugt mindestens 54 Hz, ferner bevorzugt mindestens 60 Hz, ferner bevorzugt von 60 bis 200 Hz, ferner bevorzugt von 80 bis 180 Hz, ferner bevorzugt von 100 bis 150 Hz.

In einer besonders bevorzugten Ausführungsform beträgt die Rotationsrate des Phasenmodulators kein ganz- oder halbzahliges Vielfaches der Bildrate des Sensors. Das heißt, der Phasenmodulator rotiert mit einer Rotationsrate (n) von n = x * m, wobei m die Bildrate des Sensors und x eine (positive) reelle Zahl mit Ausnahme aller natürlichen Zahlen ist. Insbesondere bei relativ langen Messzeiten kommt es zu einer Phasenverschiebung zwischen dem Phasenmodulator und der Bildaufnahme durch den Sensor. Diese Gefahr besteht vor allem wenn ein thermischer Sensor mit einer besonders langsamen Bildrate nicht konstant arbeitet. Die Phasenverschiebung führt dann zu Messungenauigkeiten, die das Ergebnis negativ beeinflussen können. In diesem Fall sollte die Rotationsrate des Phasenmodulators keine ganz- oder halbzahlige Vielfache der Bildrate des Detektors sein. Arbeitet der Detektor hingegen mit einer sehr konstanten und schnellen Bildrate (z.B. ein MCT-FPA), ist keine entsprechende Einschränkung der Rotation des Phasenmodulators notwendig. Zudem kann auch bei relativ langsamen Detektoren (z.B. Mikrobolometer) die Problematik einer Phasenverschiebung vermieden werden, indem die Länge der einzelnen Messzeiträume verkürzt wird, vorzugsweise auf unter 0,5 Sekunden. Dies kann unter anderem erreicht werden, indem nur einzelne Wellenlängen detektiert werden, anstatt ein vollständiges Spektrum aufzunehmen. Beispielsweise werden zur Aufnahme von 19 Bildern bei einer einzigen Wellenlänge und einem Detektor mit einer Bildrate von 50 Hz lediglich 0,38 Sekunden benötigt. Bei derart kurzen Messzeiträumen ist eine Rotation des Phasenmodulators in Phase mit der Detektion nicht nur möglich, sondern sogar vorteilhaft, weil sich so die höchste zu erzielende Messgenauigkeit erreichen lässt.

In einer bevorzugten Ausführungsform ist das mindestens eine optische Element so ausgebildet, dass sowohl die Probe als auch der Detektor vollständig und homogen beleuchtet sind. Dabei wird das mindestens eine optische Element vorzugsweise so zwischen Phasenmodulator und Probe positioniert, dass der Akzeptanzwinkel des Objektivs, das zur Detektion der von der Probe ausgehenden IR Strahlung voll ausgeleuchtet wird.

In einer bevorzugten Ausführungsform ist das mindestens eine optische Element derart ausgebildet, dass die IR Strahlung auf die Aperturblende, welche sich in der Brennebene eines Kondensators befindet, abgebildet wird. Diese, einer Köhlerschen Beleuchtung entsprechende Ausführung, erzeugt ein außergewöhnlich homogenes und störungsfreies hyperspektrales Bild und ermöglicht damit eine besonders exakte Wiedergabe der Probe.

In einer alternativen Ausführungsform ist das mindestens eine optische Element derart ausgebildet, dass der durch die IR Strahlung beleuchtete Bereich des Phasenmodulators auf die Probe abgebildet wird. Wird der durch die IR Strahlung beleuchtete Bereich des Phasenmodulators unmittelbar auf die Probe abgebildet, ist eine Abbildung im Verhältnis von 0,7 bis 1,3, bevorzugt von 0,8 bis 1,2, ferner bevorzugt von etwa 1 vorteilhaft. Indem der Strahlungsfleck, der vom Phasenmodulator kommenden Strahlung in etwa 1:1 auf die Probe abgebildet wird, wird diese vollständig und homogen ausgeleuchtet, wodurch die Bildung von Interferenzen und damit Messungenauigkeiten reduziert wird.

In einer bevorzugten Ausführungsform weist das IR Mikroskop mindestens ein weiteres optisches Element auf, das zwischen dem QCL und dem Phasenmodulator angeordnet ist. Das weitere optische Element kann beispielsweise eine Parallelisierung des aufgeweiteten Laserstrahls herbeiführen.

Um die Größe des Beleuchtungsflecks auf dem Phasenmodulator zu regulieren, kann ein in seiner Position verstellbares optisches Element zwischen dem QCL und dem Phasenmodulator angeordnet werden. Durch die Verschiebung der Position des optischen Elements relativ zum Phasenmodulator ist die Größe des Strahlungsflecks auf dem Phasenmodulator regulierbar, wobei das weitere optische Element vorzugsweise so positioniert wird, dass der Akzeptanzwinkel des Objektivs, das zur Detektion verwendet wird, vollständig ausgeleuchtet ist.

In einer bevorzugten Ausführungsform ist jedes optische Element unabhängig voneinander eine Linse oder ein Objektiv.

In einer bevorzugten Ausführungsform besteht jede Linse unabhängig voneinander aus einem Material, das ausgewählt ist aus der Gruppe bestehend aus Zinkselenid, Zinksulfid, Silizium, Germanium, Natriumchlorid, Bariumchlorid, Kalziumfluorid, Kaliumbromid, Silberhalogenide (Silberbromid/Silberchlorid), KRS6 Thallium Bromo-Chlorid, Infrarotstrahlung durchlassendes amorphes Material (AMTIR) und Diamant. Je nach der Wellenlänge der IR Strahlung des QCL kann der Einsatz unterschiedlicher Materialien vorteilhaft sein. Beispielsweise eignen sich Zinkselenidlinsen vor allem für die Aufnahme besonders breiter Spektren. Das IR Mikroskop kann auch mehrere unterschiedliche Linsen aufweisen. So können zur Abbildung des Strahlungsflecks des Phasenmodulators auf die Probe mehrere einzelne Linsen (siehe z.B. Figur 2) oder auch ein Spiegelobjektiv verwendet werden.

In einer bevorzugten Ausführungsform weist das IR Mikroskop einen zweiten statischen Phasenmodulator auf.

Dieser zweite Phasenmodulator ist bevorzugt im Strahlengang hinter dem rotierenden Phasenmodulator angeordnet, das heißt, dass das Licht des QCL zuerst auf den rotierenden Phasenmodulator und anschließend auf den statischen Phasenmodulator fällt. Der statische Phasenmodulator unterscheidet sich von dem ersten Phasenmodulator darin, dass er nicht rotiert. Durch den Einsatz des zweiten Phasenmodulators werden die Drehartefakte ("swirling patterns"), die durch den rotierenden Phasenmodulator entstehen, deutlich reduziert, wodurch die räumliche Kohärenz der QCL Laserstrahlung im zeitlichen Mittel weiter abnimmt. Daher sind bei Verwendung eines weiteren statischen Phasenmodulators geringere Rotationsraten des rotierenden Phasenmodulators ausreichend, um die Interferenzen insgesamt maßgeblich zu reduzieren. Wird der QCL beispielsweise mit nur ca. 2 cm$^{-1}$ pro Sekunde durchgestimmt, muss bei einer gewünschten spektralen Auflösung von 2 cm$^{-1}$ alle 1 cm$^{-1}$, d.h. jede halbe Sekunde, ein unabhängiger Messpunkt aufgenommen werden. Durch den Einsatz von zwei Phasenmodulatoren ist die Phasenmodulation und Streuung auch bei langsamen Drehraten der rotierenden Streuscheibe im zeitlichen Mittel über 0.5 Sekunden vergleichbar, so dass bereits Rotationsfrequenzen von 2 Hz, d.h. eine volle Umdrehung des Phasenmodulators pro Messpunkt, genügen, um zuverlässige Messungen durchzuführen. Dies verringert nicht nur den Verschleiß des Lagers des rotierenden Phasenmodulators, sondern ermöglicht auch den Einsatz von kugelgelagerten Phasenmodulatoren, welche erheblich kostengünstiger sind.

In einer bevorzugten Ausführungsform weist das IR Mikroskop eine Vorrichtung zur Referenzierung auf. Eine Referenzierung ermöglicht die Kontrolle der Laserleistung und der Wellenlänge während der Messung. Sie kann beispielsweise mittels eines phasenabhängigen Interferometers oder durch eine thermisch stabilisierte Gaszelle, die mit einem im spektralen Messbereich absorbierenden Gas (z.B. Ethanol) gefüllt ist, erfolgen.

In einer bevorzugten Ausführungsform ist der Phasenmodulator auf einer präzise gelagerten Rotationswelle montiert. Dadurch wird eine exakte Positionierung des Phasenmodulators erreicht, die eine reproduzierbare Erzeugung von aufeinanderfolgenden Interferenzmustern ermöglicht. Für die präzise Lagerung der Rotationswelle eignen sich beispielsweise Gleitlager, Wälzlager, Kugellager, Schrägkugellager, Vierpunktlager, Toroidalrollenlager, Tonnenlager, Nadellager, Zylinderrollenlager, Pendelkugellager, Pendelrollenlager, Kugelrollenlager, Kegelrollenlager, Rillenkugellager, Hybridlager, Cronidur-Wälzlager, Luftlager, hydrostatische Gleitlager, hydrodynamische Gleitlager oder magnetische Lagerungen. Diese Lager können einer hohen Rotationsrate des Phasenmodulators standhalten. Bei Verwendung von Lagern, welche nicht für hohe Rotationsraten des Phasenmodulators geeignet sind, kommt es hingegen schon nach kurzer Zeit zu einer Beschädigung der Lager.

Unter den Schrägkugellagern sind Spindellager bevorzugt.

Bevorzugte Rillenkugellager sind Hybridlager mit Wälzkörpern aus Siliziumnitrid (Keramik) und Lagerringen aus Stahl. Solche Lager werden auch als Hybrid-Keramiklager bezeichnet.

Bevorzugt sind Kombinationen aus mehreren Lagern, wie beispielsweise Fest-Loslagerungen, bei denen das Festlager die Welle axial führt und Fest- und Loslager die Welle radial abstützen.

In einer bevorzugten Ausführungsform ist die Rotationswelle durch Hochgeschwindigkeitslager gelagert. Hochgeschwindigkeitslager sind bei einer hohen Rotationsrate des Phasenmodulators und insbesondere bei langen Messzeiträumen von Vorteil, da sie über lange Zeiträume hinweg eine konstante Rotationsrate ermöglichen. Bei der Verwendung anderer Lager besteht die Gefahr, dass die Rotationsrate des Phasenmodulators über einen längeren Zeitraum nicht ausreichend konstant ist, da es aufgrund der Erhitzung der Lager über die Zeit oftmals zu Einbrüchen in der Drehzahl kommt. Sie sind daher für lange Messungen nicht geeignet. Hochgeschwindigkeitslager haben zudem eine Lebensdauer von mehreren Jahren, so dass die Erfinder bisher keinen Ausfall solcher Lager beobachtet haben. Durch die hohe Lebensdauer der Hochgeschwindigkeitslager reduziert sich der Wartungsaufwand des IR Mikroskops.

In einer bevorzugten Ausführungsform ist die Rotationswelle durch eine Fest-Loslagerung mit Hochgeschwindigkeitslagern gelagert. Dadurch werden die Lager bei Erhitzung der Rotationswelle nicht beschädigt. Dies ist insbesondere bei hohen Rotationsraten des Phasenmodulators von Vorteil. Alternativ können aber auch Anordnungen mit gegenseitig angestellten Lagern und schwimmende Lagerungen für die Lagerung der Rotationswelle verwendet werden, mit denen ebenfalls erfolgreiche Messungen durchgeführt werden konnten.

Beim Einsatz nicht abgedichteter Lager ist die Lebensdauer der Lager im Hochgeschwindigkeitsbetrieb auf wenige Tage limitiert. Daher sind die Lager in einer bevorzugten Ausführungsform beidseitig abgedichtete, vorgeschmierte Lager.

Hybrid-Keramiklager, insbesondere abgedichtete Hybrid-Keramiklager, sind besonders bevorzugt, da sie eine lange Lebensdauer bei hohen Rotationsraten des Phasenmodulators aufweisen. Dadurch reduziert sich der Wartungsaufwand des IR Mikroskops.

Der Phasenmodulator erhitzt sich im Dauerbetrieb über mehrere Stunden, bis sich ein Gleichgewicht zwischen abgestrahlter Wärme und Reibungsverlusten einstellt. Wenn das Gleichgewicht erreicht ist, hat sich die Temperatur des Phasenmodulators bei etwa 80°C stabilisiert. Hybrid-Keramiklager können dieser hohen Betriebstemperatur dauerhaft standhalten. Bei der Verwendung anderer Lager ist eine Temperaturregelung notwendig, um lange Messungen durchzuführen, da die Lager bei einer Betriebstemperatur von etwa 80°C regelmäßig ausgetauscht werden müssten.

Eine drehbare Achse zur Positionierung des Phasenmodulators kann beispielsweise elektromagnetisch, über einen Riemen, Keilriemen, Druckluft, Luftturbinenantrieb oder Zahnräder angetrieben werden.

In einer bevorzugten Ausführungsform weist das erfindungsgemäße IR Mikroskop eine Temperaturregelung auf. Die Lebensdauer der Lager der Rotationswelle ist besonders lang, wenn die Temperatur der Vorrichtung zum Rotieren des Phasenmodulators hinreichend niedrig bleibt. Die Bestimmung der chemischen Zusammensetzung einer Probe mittels Infrarotmikrospektroskopie kann aber je nach Probengröße und zu untersuchendem Spektralbereich mehrere Stunden in Anspruch nehmen. Daneben sind Hochdurchsatzanwendungen denkbar, bei denen Infrarotmikroskope über mehrere Tage und länger im Dauerbetrieb eingesetzt werden. Durch die kontinuierliche Rotation des Phasenmodulators erhitzt sich bei hohen Drehraten die Rotationswelle während des Betriebs des IR Mikroskops durch Reibung und/oder elektrische Verluste. Daher ist eine Temperaturregelung vorteilhaft. Durch die Temperaturregelung wird eine Schwankung des Messsignals des IR Mikroskops aufgrund von Temperaturschwankungen der Vorrichtung zur Rotation des Phasenmodulators vermieden. Dadurch erhöht sich die Messgenauigkeit, insbesondere bei längeren Messungen.

Die Temperaturregelung kann beispielsweise über eine Kopplung der Vorrichtung zur Rotation des Phasenmodulators zu einem Kühlkreis mit Wasserkühlung realisiert sein.

Durch die Temperaturregelung lässt sich die Vorrichtung zur Rotation des Phasenmodulators zudem bei einer Temperatur einstellen, bei der selbst im Dauerbetrieb keine Mikroskopkomponenten, insbesondere keine Komponenten der Vorrichtung zur Rotation des Phasenmodulators, beschädigt werden. Dadurch verlängert sich die Lebensdauer der Vorrichtung zur Rotation des Phasenmodulators und der Wartungsaufwand des IR Mikroskops sinkt.

In einer bevorzugten Ausführungsform erfolgt die Temperaturregelung durch eine passive Labyrinthluftkühlung. Die hierfür verwendete Sperrluft entspricht vorzugsweise getrockneter Druckluft, wie sie von einem FTIR "purge gas"-Generator geliefert wird. Dadurch wird dem Infrarotmikroskop getrocknete Druckluft zugeführt, die zugleich von Vorteil ist, um die Effekte schwankender Luftfeuchtigkeit auf die Messung zu minimieren. Auch Stickstoff oder Sauerstoff sind als Sperrluft geeignet.

In einer bevorzugten Ausführungsform rotieren eine Welle zur Positionierung des Phasenmodulators und eine Vorrichtung zur Ausrichtung des Phasenmodulators relativ zur Welle ohne Unwucht. Dies kann beispielsweise durch eine rotationssymmetrische Bauform erreicht werden. Ohne Vermeidung von Unwucht wäre die mechanische Belastung des rotierenden Phasenmodulators auf das IR Mikroskop deutlich sichtbar. Das IR Mikroskop würde anfangen zu schwingen, was sich bei hohen Vergrößerungen an einem Zittern der Probe äußert. Dadurch wird die optische Auflösung reduziert. Durch das Vermeiden von Unwucht werden derartige ungewünschte mechanische Einflüsse auf die Messung mit dem IR Mikroskop minimiert. Zudem wird die Lebensdauer der eingesetzten Lager erhöht.

In einer bevorzugten Ausführungsform weist das IR Mikroskop im Bereich der Rotationsfrequenzen des Phasenmodulators keine Eigenfrequenzen, sondern schwingungsdämpfende Eigenschaften auf. Dadurch lassen sich die mechanischen Einflüsse des rotierenden Phasenmodulators auf die Messung mit dem IR Mikroskop weiter reduzieren.

In einer bevorzugten Ausführungsform sind eine Welle zur Positionierung des Phasenmodulators und eine Antriebswelle des Phasenmodulators identisch. Dadurch reduziert sich die Bauform der Vorrichtung zur Rotation des Phasenmodulators. In einer besonders bevorzugten Ausführungsform ist die Welle eine Hohlwelle, in deren Inneren die Infrarotstrahlung zur Beleuchtung der Probe in dem IR Mikroskop verläuft.

In einem weiteren Aspekt betrifft die Erfindung ein Verfahren zum molekülspektroskopischen Analysieren einer Probe mit einem IR Mikroskop, umfassend die Schritte Bestrahlen der Probe mit einer Infrarot (IR) Strahlung in Form eines Laserstahls mittels eines Quantenkaskadenlasers (QCL), wobei die IR Strahlung über einen Phasenmodulator und mindestens ein optisches Element auf die Probe gelenkt wird, und Detektieren der von der Probe reflektierten und/oder transmittierten IR Strahlung. Der Phasenmodulator ist eine rotierbare IR-transparente Streuscheibe oder ein rotierbarer IR Strahlung reflektierender Streuspiegel. Indem der Phasenmodulator während des Detektierens kontinuierlich rotiert und keine am Zentrum des Phasenmodulators gestreute IR Strahlung auf die Probe gelenkt wird, wird die Verwendung von QCL für molekülspektroskopische Analysen komplexer Proben ermöglicht. Im Vergleich zu herkömmlichen Verfahren können hochauflösende und genaue Messungen in sehr kurzer Zeit durchgeführt werden. FT-IR Messungen, die eine ähnliche Auflösung bieten, benötigen mehrere Minuten bis Stunden, wohingegen Analysen mit dem erfindungsgemäßen Verfahren bereits innerhalb weniger Sekunden abgeschlossen werden können. Messungen unter Verwendung von QCL in Verbindung mit schnellen MCT-FPAs erlauben zwar kürzere Messzeiten als FT-IR Systeme, zeigen ohne Phasenmodulation aber zu hohe Messungenauigkeiten für eine zuverlässige Analyse komplexer Proben (Yeh et al., 2015).

Um zu erreichen, dass keine am Zentrum des Phasenmodulators gestreute IR Strahlung auf die Probe gelenkt wird, kann das Verfahren auf verschiedene Weisen angepasst werden. In einer bevorzugten Ausführungsform wird das Zentrum des Phasenmodulators von der IR Strahlung nicht erfasst. Dadurch entsteht keine am Zentrum des Phasenmodulators gestreute IR Strahlung.

In einer weiteren Ausführungsform wird die IR-Strahlung über eine Abdeckung, die hinter dem Zentrum des Phasenmodulators angeordnet ist auf die Probe gelenkt, wobei die Abdeckung die am Zentrum des Phasenmodulators gestreute IR Strahlung blockiert.

In einer weiteren Ausführungsform wird die IR-Strahlung über eine Linsenanordnung auf, die zwischen dem Phasenmodulator und der Probe angeordnet ist, auf die Probe gelenkt, wobei die Linsenanordnung nur die außerhalb des Zentrums des Phasenmodulators gestreute IR Strahlung auf die Probe lenkt.

In einer bevorzugten Ausführungsform werden mindestens 2, bevorzugt 2 bis 10, ferner bevorzugt 2 bis 6, ferner bevorzugt 2 bis 4 unterschiedliche Wellenlängen der transmittierten und/oder reflektierten IR Strahlung detektiert. Für die Analyse biologischer Proben kann bereits die Aufnahme von zwei unterschiedlichen Wellenlängen ausreichend sein, um die Gestalt eines Gewebes, insbesondere die Lage und den Zustand der Zellen, abzubilden. Anstatt ein vollständiges Spektrum zu analysieren, ist es möglich, Bilder einiger weniger einzelner Wellenlängen aufzunehmen, wodurch die Aufnahmedauer signifikant verkürzt wird. Bei einer Bildrate des Sensors von 50 Hz und einer Aufnahme von 19 Bildern pro Wellenlänge sind beispielsweise lediglich 2,5 Sekunden nötig, um Messungen bei zwei unterschiedlichen Wellenlängen durchzuführen.

In einer bevorzugten Ausführungsform wird die IR Strahlung mit einer spektralen Auflösung von 1 cm$^{-1}$ bis 8 cm$^{-1}$, bevorzugt 2 cm$^{-1}$ bis 8 cm$^{-1}$, ferner bevorzugt 4 cm$^{-1}$ bis 8 cm$^{-1}$ detektiert. Soll ein Spektrum über mehrere Wellenzahlen aufgenommen werden, ist eine Auflösung von 1 cm$^{-1}$ bis 8 cm$^{-1}$ bevorzugt. Eine Auflösung von unter 1 cm$^{-1}$ ist regelmäßig nicht möglich, da die spektrale Linienbreite eines QCL mindestens 0,5 cm$^{-1}$ beträgt. Die Linienbreite stellt somit das untere Limit für die spektrale Auflösung dar. Je nach Probe kann jedoch eine geringere Auflösung ausreichend sein, wodurch die Aufnahmegeschwindigkeit erhöht wird. Beispielsweise zeigen biologische Proben im IR Spektrum regelmäßig keine spezifischen Eigenschaften, die einer hohen Auflösung bedürfen. Daher ist für biologische Proben eine Auflösung von 4 cm$^{-1}$ bis 8 cm$^{-1}$ ausreichend. Für eine Auflösung von 4 cm$^{-1}$ kann ein QCL mit einer Intervallbreite von 2 cm$^{-1}$ durchgestimmt werden. Für eine Auflösung von 8 cm$^{-1}$ ist dementsprechend eine Intervallbreite von 4 cm$^{-1}$ möglich. Bei einer Auflösung von 4 cm$^{-1}$ bis 8 cm$^{-1}$ können zudem mehrere aufeinanderfolgende Bilder integriert werden, womit das Verhältnis von Signal zu Hintergrundrauschen deutlich verbessert werden kann. So können bei einer Auflösung von 4 cm$^{-1}$ (d.h. 2 cm$^{-1}$ Intervallbreite) bei einer Durchstimmgeschwindigkeit von 10 cm$^{-1}$ pro Sekunde und einer Bildrate von 50 Hz jeweils 10 Bilder integriert werden (2 cm$^{-1}$ ÷ 10 cm$^{-1}$/s * 50 Hz = 0,2 Sekunden * 50 Hz = 10). Demgemäß können bei einer Auflösung von 8 cm$^{-1}$ (das heißt 4 cm$^{-1}$ Intervallbreite) und einer Durchstimmgeschwindigkeit von 10 cm$^{-1}$/s und 50 Hz Bildrate 20 Bilder integriert werden.

In einer bevorzugten Ausführungsform umfasst das Verfahren ferner den Schritt Fokussieren der Probe entsprechend der Wellenlänge der IR Strahlung des QCL. Die Abbildung der Probe auf den Detektor ist häufig abhängig von der Wellenlänge des einfallenden Lichts. Da der QCL weitgehend diskrete Wellenlängen emittiert, ist es möglich, den Fokus des Detektors entsprechend einzustellen. Bei der Aufnahme eines Spektrums über mehrere Wellenlängen durch ein Durchstimmen des QCL ändert sich die Wellenlänge der am Detektor eingehenden Strahlung kontinuierlich, wodurch der Fokus verlorengehen kann. Eine Angleichung des Fokus in Abhängigkeit der Wellenlänge des QCL ist somit vorteilhaft. Dies kann beispielsweise durch die synchronisierte Verschiebung der Probe oder des Detektors erfolgen. Dabei ist eine Verschiebung des Detektors regelmäßig einfacher zu realisieren, da bei Vergrößerungen die Strecke, die dieser versetzt werden muss, im Vergleich zur Probe länger ist und somit eine höhere Toleranz bei der Stellgenauigkeit besteht. Um den Detektor bzw. die Probe in Abhängigkeit der vom QCL emittierten Wellenlänge zu positionieren, kann deren Position mit Hilfe einer Computereinheit gesteuert werden. Die Computereinheit umfasst zudem eine Wellenlängenreferenzierung, beispielsweise ein phasenabhängiges Interferometer. Die von der Wellenlängenreferenzierung eingehende Information über die emittierte Wellenlänge wird von der Computereinheit verarbeitet und die Position des Detektors bzw. der Probe entsprechend angepasst. Auf diese Weise wird gewährleistet, dass die Probe bei jeder Wellenlänge scharf auf den Detektor abgebildet wird.

In einer bevorzugten Ausführungsform umfasst das Verfahren ferner den Schritt Erstellen einer hyperspektralen Abbildung der Probe. Der Begriff "hyperspektrale Abbildung" bezeichnet eine bildliche Darstellung der Probe, die auf der Messung von mindestens zwei unterschiedlichen Wellenlängen, bevorzugt auf einem teilweisen oder vollständigen IR Spektrum der Probe beruht. Sie gibt die Struktur der Probe anhand deren biochemischer Zusammensetzung wieder, so dass beispielsweise bei einer Gewebeprobe die Anordnung und der Zustand der Zellen und anderer Gewebestrukturen (z.B. Bindegewebe) erkennbar sind.

In einer bevorzugten Ausführungsform rotiert der Phasenmodulator mit einer Rate, die mindestens 5%, bevorzugt mindestens 8%, ferner bevorzugt mindestens 20% höher als eine Bildrate des Detektors (Sensors) ist. Die Erfinder haben festgestellt, dass sich die Messgenauigkeit noch weiter steigern lässt, indem der Phasenmodulator kontinuierlich mit einer Rate rotiert, die mindestens 5% höher als die Bildrate ist. Insgesamt wird damit eine hohe Messgenauigkeit bei kurzen Messzeiten ermöglicht. Dies ist insbesondere für operationsbegleitende Analysen von biologischen Proben entscheidend.

**Beispiele**

1. Bevorzugte Ausführungsformen

Figur 1 zeigt eine erste allgemeine Ausführungsform des erfindungsgemäßen IR Mikroskops 1. Das IR Mikroskop 1 umfasst zwei QCL 3, deren Laserstrahlen über Umlenkspiegel 12 und Strahlenteiler 24 auf einen rotierenden Phasenmodulator 5 emittiert werden. Anschließend fällt die Strahlung durch eine Linse 6 auf eine Probe 2, die auf einem Probenhalter 8 befestigt ist. Die von der Probe 2 ausgehende IR Strahlung wird von einem Sensor 4 detektiert. Gleichzeitig wird ein Teil der Laserstrahlung der QCL 3 über einen Strahlenteiler 24 einer Wellenlängenreferenzierung 7 zugeführt. Die Steuerung und Kontrolle des IR Mikroskops 1 erfolgt über eine Laserkontrolle 9, eine Aufnahmeeinheit 10 und einen Lock-in-Verstärker 11.

Figur 2 zeigt Ausführungen des Strahlengangs durch das IR Mikroskop 1 in Transmission (Figur 2 A bis D, I und J) und Reflexion (Figur 2 E bis H, K und L), wobei die IR Strahlung unmittelbar auf die Probe abgebildet wird. Als Phasenmodulator 5 kann sowohl eine rotierende IR transparente Streuscheibe 21 (Figur 2 A bis H) als auch ein rotierender IR reflektierender Streuspiegel 25 (Figur 2 I bis L) verwendet werden. Neben dem rotierenden Phasenmodulator 5 kann eine weitere unbewegte Streuscheibe 23 bzw. IR reflektierender Streuspiegel 26 (Figur 2 B, C, F, H, J und L) zum Einsatz kommen. Im Strahlengang können zudem unterschiedliche Linsen angeordnet sein, die der Abbildung des Strahlungsflecks des Phasenmodulators 5 auf die Probe (Linsen 22), der Fokussierung des QCL 3 auf den rotierenden Phasenmodulator 5 (Linse 27) oder der Fokussierung der von der Probe 2 ausgehenden Strahlung auf den Sensor 4 (Linsen 28), dienen.

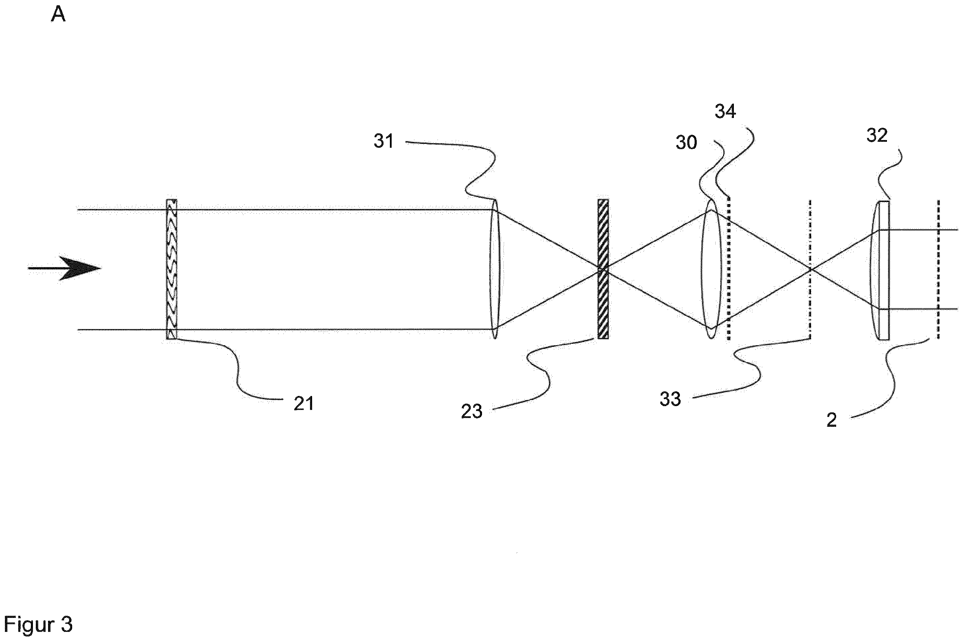

Figur 3 zeigt zwei Ausführungsformen des Strahlengangs durch das IR Mikroskop 1 in Transmission. Gemäß Figur 3 A wird die IR Strahlung von der rotierenden IR-transparenten Streuscheibe 21 über eine Zink-Selenid Linse (f= 50 mm) 31, eine unbewegte IR transparente Streulinse 23 und eine Kollektorlinse (Zink-Selenid, f= 25 mm) 30 auf die Aperturblende 33 abgebildet. Diese Anordnung entspricht einer Köhlerschen Beleuchtung, die vor allem in einer einfachen Vergrößerung ein außergewöhnlich homogenes und störungsfreies Bild erzeugte. Figur 3 B zeigt einen Aufbau für eine vierfache Vergrößerung. Hierbei wird die IR Strahlung von der rotierenden IR-transparenten Streuscheibe 21 über eine Zink-Selenid Linse (f = 25 mm) 30, eine Kondensorlinse (Barium-Fluorid, f = 30/22,8 mm) 32 und eine Zink-Selenid Linse (f = 50 mm) 31, auf eine unbewegte IR transparente Streulinse 23 gelenkt. Von dieser aus wird die IR Strahlung mittels einer Zink-Selenid Linse (f= 25 mm) 30 hinter die Probe 2 abgebildet.

## 2. Konfiguration des Phasenmodulators

Zur Ermittlung der Konfiguration des Phasenmodulators wurden Referenzierungen von jeweils zwei Leermessungen durchgeführt, wobei die Drehrate und die Beleuchtung der Streuscheibe variiert wurden. Alle Messungen wurden mit einem QCL mit einem Spektralbereich von 1027 bis 1087 cm$^{-1}$ durchgeführt. Der optische Aufbau der Beleuchtung ist in Figur 3 B dargestellt. Beide Streuscheiben hatten einen Durchmesser von 25,4 mm. Der Durchmesser des Laserstrahls betrug ca. 10 mm. Für jede Leermessung wurde der QCL dreimal in ca. 11 Sekunden von 1027-1087 cm$^{-1}$ durchgestimmt. Die Detektion erfolgte im Abbildungsmaßstab 4:1 mit einer effektiven Pixelgröße von 3.65 $\mu$m. Die Mikrobolometerkamera arbeitete mit einer Bildrate von 50 Hz.

Nach Referenzierung von der ersten auf die zweite Leermessung kann in jedem Pixel die spektrale Standardabweichung des Absorbanzspektrums berechnet werden. Diese Kenngröße wurde zur Bewertung der Messgenauigkeit von Phillips et al. 2013 eingeführt. Die Absorbanz wird dabei als der negative natürliche Logarithmus der relativen Transmission definiert. Die spektrale Standardabweichung wird pixelweise aus der Referenzierung einer ersten Leermessung auf eine weitere berechnet und kann als Breite der 0-Absorbanz Linie in jedem Pixel interpretiert werden. Zunächst wurde mit der in Figur 3 B gezeigten Konfiguration gemessen, wobei der Drehpunkt der bewegten Streuscheibe vom Laser beleuchtet und in das Sichtfeld des Detektors abgebildet wurde (Experimente 1 und 2). Für die Experimente 3 und 4 wurde die bewegte Streuscheibe um mehrere Millimeter verschoben, so dass das Zentrum der bewegten Streuscheibe nicht beleuchtet wurde. Für die Auswertung der vier Experimente wurden die Daten mit einer spektralen Intervallbreite von im Mittel 2.4 cm$^{-1}$ gemittelt.

Spektrale Standardabweichung bei unterschiedlicher Drehrate und Beleuchtung:

| Experiment | Drehrate | Beleuchtung des Zentrums | Mittelwert der spektralen Standardabweichung [a.u.] |
|---|---|---|---|
| 1 | 51 Hz | + | 0,0227 |
| 2 | 60 Hz | + | 0,0081 |
| 3 | 51 Hz | - | 0,0172 |
| 4 | 60 Hz | - | 0,0054 |

Experimente 1 - 4 zeigen, dass die spektrale Standardabweichung signifikant reduziert wird, wenn das Zentrum der Streuscheibe vom Laserstrahl nicht erfasst und somit auch nicht in das Sichtfeld des Detektors abgebildet wird. Zudem wird die Messgenauigkeit deutlich erhöht, wenn für die bewegte Streuscheibe eine Drehrate gewählt wird, die 20% höher als die Bildrate des Detektors ist (hier eine Drehrate von 60 Hz bei einer Bildrate der Mikrobolometerkamera von 50 Hz).

Experimente 5 - 9 wurden bei einer verbesserten Beleuchtungsoptik durchgeführt, durch die mehr Licht auf den Detektor trifft. Dadurch konnte ein höheres Signal erreicht werden, so dass sich das Verhältnis von Signal zu Hintergrundrauschen verbesserte. Dass mehr Licht auf den Detektor trifft wurde dadurch erreicht, dass der Laserstrahl im Unterschied zu den Experimenten 1 - 4 nicht aufgeweitet wurde. Alternativ kann ein Laser mit einem kleineren Strahldurchmesser bzw. einer kleineren Étendue verwendet werden. Die Étendue misst die Ausdehnung eines Strahlenbündels. Sie setzt sich aus dem Querschnitt und dem Raumwinkel zusammen und ändert sich nicht beim Durchgang eines Strahlenbündels durch ein optisches System.

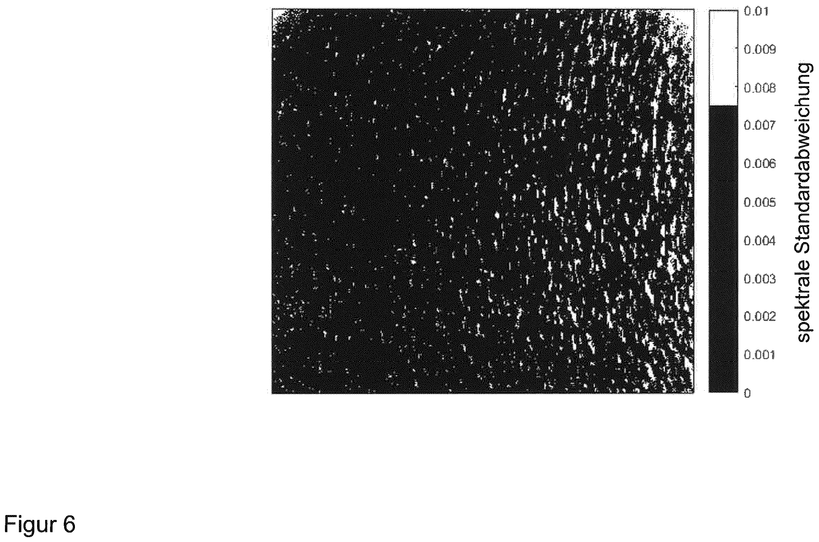

In Experiment 5 wurde die Messungenauigkeit durch Referenzieren des mittleren hyperspektralen Bildes aus 5 Leermessungen über den Spektralbereich von 1027-1087 cm$^{-1}$ auf das mittlere hyperspektrale Bild von 5 weiteren Leermessungen über den identischen spektralen Bereich berechnet. Die Drehrate der bewegten Streuscheibe betrug 62.5 Hz. Die Bildrate des Detektors betrug 50 Hz. In Figur 6 ist die pixelweise berechnete spektrale Standardabweichung (berechnet unter Verwendung des natürlichen Logarithmus) dargestellt. Das Zentrum bzw. der Drehpunkt der Streuscheibe liegt rechts außerhalb des Bildfeldes. Somit ist die Bahngeschwindigkeit am linken Bildrand am höchsten und am rechten Bildrand am niedrigsten. An der Zunahme der weißen Bereiche vom linken zum rechten Bildrand ist zu erkennen, dass die Messungenauigkeit zum rechten Bildrand hin zunimmt. Das bedeutet, dass die Messungenauigkeit zunimmt, je näher am Drehpunkt der Streuscheibe die IR Strahlung auftrifft. Somit wird bei einem größeren Abstand zum Zentrum der Streuscheibe eine höhere Messgenauigkeit erreicht als bei einem kleineren Abstand zum Zentrum der Streuscheibe. Die Lage des Drehpunktes bzw. Zentrums der Streuscheibe rechts außerhalb des Bildfeldes wird durch ringförmige Strukturen in Figur 6 angedeutet.

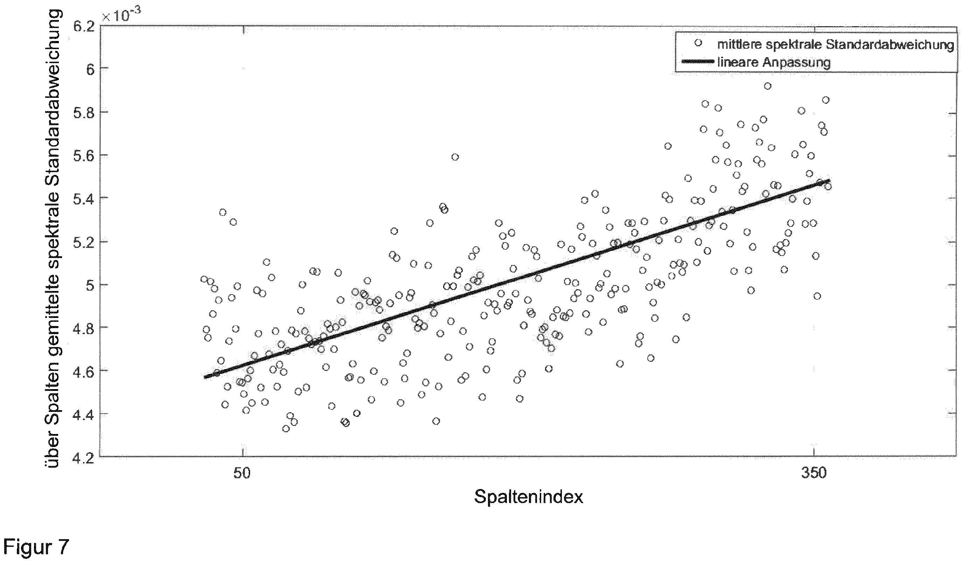

Das Bild aus Figur 6 wurde in Spalten unterteilt. Jede Spalte hat eine Breite von 7.3 $\mu$m. Der Spaltenindex wurde von links nach rechts aufsteigend festgelegt. Da der Drehpunkt der Streuscheibe rechts außerhalb des Bildfeldes liegt, entspricht ein kleinerer Spaltenindex einem größeren Abstand zum Drehpunkt der Streuscheibe und damit einer höheren Bahngeschwindigkeit. Durch Mitteln über die Spalten des Bildes wurde ein näherungsweise linearer Zusammenhang zwischen der Messungenauigkeit und dem Spaltenindex erhalten (Figur 7). In Figur 7 wurden für den Abstand des Zentrums der Drehscheibe zum rechten Bildrand 200 Spalten (entspricht 1,46 mm) angenommen. Eine Anpassung mit einer linearen Funktion ergab die folgenden Fitparameter:

Funktion:

$$y = b1 * (2 * \pi * 7.3\ \mu m * ((350-x)+b2) * 62.5\ Hz) + b3$$

wobei

y die mittlere spektrale Standardabweichung [a.u.] ist,

x der Spaltenindex ist,

b1 die Proportionalitätskonstante zwischen Bahngeschwindigkeit und mittlerer spektrale Standardabweichung [a.u./(m/s)] ist,

b2 der Abstand des Zentrums der Streuscheibe zum rechten Bildrand ist, und

b3 der bahngeschwindigkeitsunabhängige Anteil der mittleren spektralen Standardabweichung [a.u.] ist.

Für den Abstand des Mittelpunkts der Drehscheibe zum rechten Bildrand wurden 200 bzw. 1000 Spalten (entspricht 1,46 und 7,3 mm) angenommen, wobei eine Spalte einem Abstand von 7,3 $\mu$m entspricht.

| b2 | 200 (entspricht 1,46 mm) | 1000 (entspricht 7,3 mm) |
|---|---|---|
| b1 [a.u./(m/s)] | -0,0010646 | -0,0010646 |
| b3 [a.u.] | 4,4495*10$^{-5}$ | 6,2318*10$^{-5}$ |

Das Bildfeld in Figur 6 hat eine Breite von ca. 3 mm. Die mittlere spektrale Standardabweichung am linken Bildrand ist deutlich niedriger als am rechten Bildrand, was dem 3 mm größeren Abstand zum Zentrum der Streuscheibe geschuldet ist. Die Ergebnisse zeigen somit, dass die höchste Messgenauigkeit erreicht wird, indem die IR Strahlung im größtmöglichen Abstand zum Zentrum der Streuscheibe auf die Streuscheibe trifft.

Experimente 6 - 9 wurden mit den gleichen Parametern wie Experiment 5 durchgeführt abgesehen davon, dass 3 auf 3 Leermessungen referenziert wurden und dass der Drehpunkt weiter aus dem Bild entfernt wurde. Die Drehrate wurde variiert, um den Einfluss der Drehrate auf die Messungenauigkeit zu untersuchen.

Spektrale Standardabweichung bei unterschiedlicher Drehrate und Beleuchtung:

| Experiment | Drehrate | Beleuchtung des Zentrums | Mittelwert der spektralen Standardabweichung [a.u.] |
|---|---|---|---|
| 5 | 62,5 Hz | + | 0,0052 |
| 6 | 54 Hz | - | 0,0028 |
| 7 | 58 Hz | - | 0,0019 |
| 8 | 64 Hz | - | 0,0019 |
| 9 | 70 Hz | - | 0,0017 |

Experiment 6 zeigt, dass, wenn die bewegte Streuscheibe mit einer Drehrate rotiert, die 8% höher als die Bildrate des Detektors ist (hier eine Drehrate von 54 Hz bei einer Bildrate der Mikrobolometerkamera von 50 Hz), eine sehr hohe Messgenauigkeit erreicht wird. Experimente 6 - 9 zeigen, dass sich die Messgenauigkeit mit zunehmender Drehrate der Streuscheibe weiter erhöht.

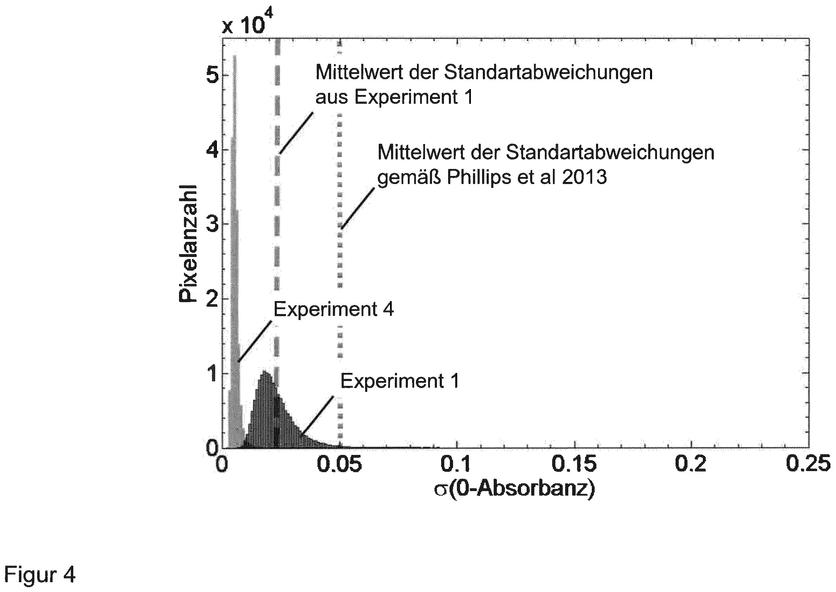

Figur 4 zeigt ein Histogramm der pixelweise berechneten spektralen Standardabweichung für Experiment 1 und 4. Die spektrale Standardabweichung lag bei beiden Experimenten deutlich unter der herkömmlicher Verfahren (Phillips et al., 2013). Dies zeigt, dass die Messgenauigkeit durch Reduzierung der räumlichen Kohärenz im zeitlichen Mittel deutlich verbessert wird.

Eine weitere Methode zur Bestimmung des Messfehlers wurde kürzlich von Yeh et al. 2015 vorgeschlagen. Dabei wird der quadratische Mittelwert der Pixelwerte aus einem Bild bei fester Wellenlänge berechnet. Da Yeh et al. 2015 die Absorbanz über den Zehnerlogarithmus definieren, wird diese Definition in diesem Abschnitt zur besseren Vergleichbarkeit der Ergebnisse übernommen. In Yeh et al. 2015 wurde zur Detektion ein stickstoffgekühlter MCT-Detektor verwendet. Diese Detektoren sind wesentlich teurer als Mikrobolometerkameras, haben jedoch deutlich schnellere Bildaufnahmeraten. Auf eine Reduktion der räumlichen Kohärenz im zeitlichen Mittel wurde verzichtet. Dies führte zu beachtlichen Schwankungen in der 0-Absorbanz Linie eines zufällig ausgewählten Pixels aus der QCL Messung im Vergleich zu den Schwankungen des Mittels der 0-Absorbanzlinien von 1000 Pixeln (Yeh et al. 2015). Diese Divergenz zeigt, dass bei QCL-basierten Messungen ein systematischer Messfehler vorhanden ist.

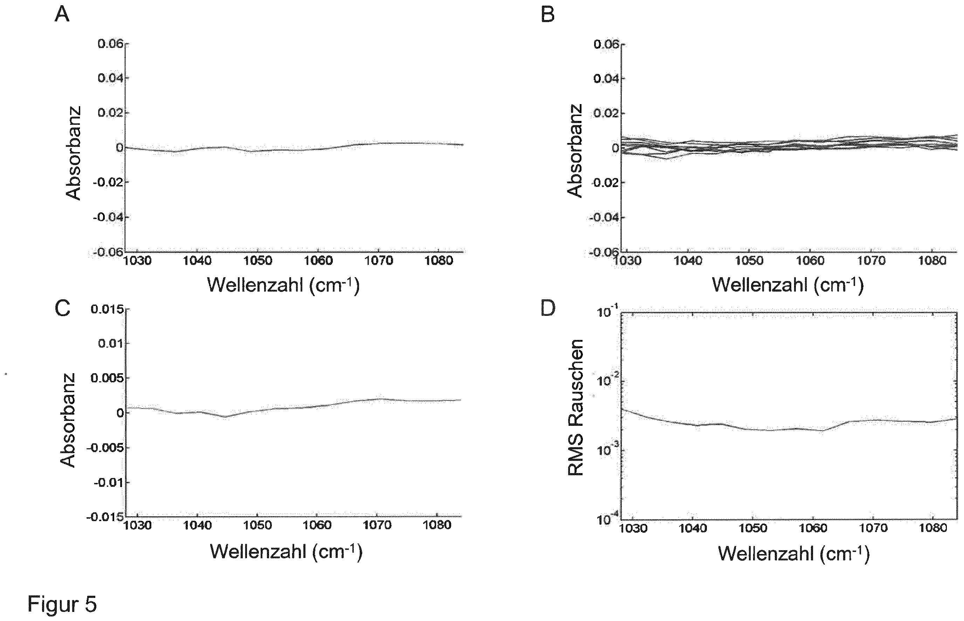

Im Gegensatz zu dem in Yeh et al., 2015 beschriebenen mikroskopischen Aufbau, liegt die 0-Absorbanz Linie in Experiment 4 auch bei Betrachtung einzelner Pixel nahe der absoluten 0-Linie (Figur 5). Es gibt keine scheinbar periodischen Schwankungen um die 0-Linie. Zusätzlich ist die Genauigkeit, d.h. der Abstand der gemessenen 0-Absorbanz-Linie zur absoluten 0-Linie bei Experiment 4 kleiner als in allen betrachteten Fällen in Yeh et al., 2015. Dies ist insbesondere bemerkenswert, als in Experiment 4 ein Mikrobolometer zur Detektion verwendet wurde, dessen Aufnahmequalität grundsätzlich wesentlich geringer ist als die von MCT-FPAs. Die räumliche Kohärenz des QCL führt demnach zu systematischen Messfehlern, welche selbst durch den Einsatz von hochsensiblen und teuren MCT-FPAs nicht ohne weiteres korrigiert werden können. Das in Experiment 4 genutzte System zur QCL-basierten Mikroskopie mit Mikrobolometerkamera kann diese Messfehler hingegen durch den Einsatz der Streuscheiben zur Verminderung der räumlichen Kohärenz im zeitlichen Mittel minimieren. Die so erhaltene Messgenauigkeit ist vergleichbar mit FTIR basierten Systemen bei deutlich verkürzter Messzeit.

## 3. Identifizierung von Becherzellen in ungefärbten Dünnschnitten des Dickdarms

### 3.1 Material und Methoden

Proben des Dickdarms wurden von gesunden erwachsenen C57BL/6 Mäusen entnommen und fixiert. Aus dem Gewebe wurden 8 $\mu$m dicke Paraffinschnitte hergestellt, und mittels IR Mikroskopie untersucht.

Hierzu wurden zwei Quantumkaskadenlaser (Daylight Solutions Inc., USA) verwendet, die über 1027 bis 1087 cm$^{-1}$ und 1167 bis 1319 cm$^{-1}$ durchgestimmt werden konnten (entspricht einem Wellenlängenbereich von 9,74 $\mu$m bis 9,20 $\mu$m und 8,57 $\mu$m bis 7,58 $\mu$m). Für die Messung wurde jeder Laser über den gesamten Bereich zwanzigmal innerhalb von 11,3 Sekunden durchgestimmt. Ein 640 x 480 Pixel umfassender Mikrobolometerarray (InfraTec GmbH, Deutschland) wurde zur Detektion der durch die Probe transmittierten IR Strahlung verwendet. Die Bildrate betrug 50 Hz. Die Rotationsrate der Streuscheibe war höher als die Bildrate des Mikrobolometers. Alle Messungen wurden mit einem projektierten Mittenabstand der Pixel ("Projected Pixel Pitch") in der Probenebene von 3,65 $\mu$m aufgenommen.

Zwei Infrarotlinsen wurden für eine 4:1 Vergrößerung verwendet und das Sichtfeld betrug 2,8 x 3,1 mm$^2$. Die örtliche Auflösung betrug 9,4 $\pm$ 1,8 $\mu$m (bei 1065 cm-').

Die Synchronisation der Durchstimmzeit und der Bildrate des Bolometers resultierten in einer spektralen Auflösung von 4 cm$^{-1}$, welche für die Analyse des mittleren Infrarotspektrums von Gewebedünnschnitten ausreichend ist. Die absolute Aufnahmezeit für IR Bilder über die vollständige Durchstimmbreite der Laser betrug 7,5 Minuten für jede der sechs untersuchten Proben. Eine einzelne Leermessung wurde während weiterer 1,9 Minuten aufgenommen, die als Referenz für alle sechs hyperspektralen Abbildungen verwendet wurde. Die Absorptionsspektra wurden als negative natürliche Logarithmen der Transmissionsspektra für jeden Pixel individuell berechnet. Bis auf eine Hintergrundkorrektur, Mittelung über spektrale Intervalle (Spectral Binning) (bei einer mittleren Intervallbreite von 2,4 cm$^{-1}$), eine Wasserabsorptionskorrektur und einen Gaußsche Unschärfefilter wurden keine weiteren Vorverarbeitungen durchgeführt.

Zur Analyse der mittleren IR spektralen Information wurden vier Schritte durchgeführt:

1. Zufällige Auswahl eines von sechs Dünnschnitten, welcher als sogenannte Trainingsprobe verwendet wurde,

2. unüberwachte Klassifikation der Probendaten unter ausschließlicher Verwendung der Information der Trainingsprobe. k-means-Algorithmus wurde auf die Trainingsdaten angewendet und insgesamt zehn Gruppen ausgewählt, von denen drei dem Paraffinspektrum oder dem blanken Substrat zugeordnet wurden und sieben dem Gewebe. Insgesamt wurden 323300 einzelne Spektren zum Trainieren des Klassifikationsverfahrens verwendet.

3. Training eines Klassifikationsverfahrens (random decision forest) auf Basis von Schritt 2, wobei ausschließlich die Trainingsprobe verwendet wurde. Ingesamt wurden 100 Entscheidungsbäume entwickelt.

4. Nach den Schritten 1 bis 3 können keine weiteren Trainings ("retraining") oder Änderungen akzeptiert werden. Das eintrainierte Klassifikationsverfahren wurde anschließend auf die übrigen Dünnschnitte ("blinde Validierung") angewendet und als Ergebnis der Analyse verwendet.

Sämtliche Analysen wurden unter Verwendung von MATLAB (R2014a, The MathWorks Inc., USA) ausgeführt.

*3.2 Ergebnisse*

Bereits die Analyse einer einzelnen Wellenlänge genügte, um einen ersten Eindruck der Qualität der erhaltenen Abbildung zu gewinnen. Die Aufnahme der Infrarottransmission bei 1218 cm$^{-1}$ ($\pm$ 1,2 cm$^{-1}$) über den vollständigen Dickdarmschnitt zeigte deutlich das zentrale Lumen umgeben von Dickdarmepithel und Muskelgewebe (Lamina muscularis mucosae). Durch digitalen Zoom lies sich auch die Substruktur des Epithels erkennen. Trotz der erstaunlich umfangreichen Information, die bereits aus den Aufnahmen einer einzigen Wellenlänge gewonnen werden konnten, wurden für die weitere Untersuchungen vollständige Spektren gemäß Schritt 2 der Datenanalyse (k-means) verwendet. Die erhaltenen IR Bilder zeigten deutlich die Morphologie des Gewebes, mit der im Inneren des Dickdarms liegenden Schleimschicht. Diese enthält vor allem Mucin, welches von Becherzellen produziert wird und auf Grund des hohen Anteils an hochglykosylierten Peptiden eine hohe IR Absorption im Kohlenhydratbereich (1000 bis 1100 cm-') zeigt. Um jeden Pixel der hyperspektralen Aufnahme einem spezifischen Gewebe zuzuordnen, wurde das Verhältnis der Absorbanz bei 1079 cm$^{-1}$ und 1181 cm$^{-1}$ und das Absorbanzintegral von 1027 cm$^{-1}$ bis 1087 cm$^{-1}$ berechnet (Tabelle 1). So konnten nicht nur Schleimschicht und Becherzellen, sondern auch die Lamina muscularis, die Lamina propria und die Becherzellen umgebenden Epithelzellen identifiziert werden.

*Tabelle 1:*

| Biomedizinische Zuordnung | Absorbanzverhältnis 1079 cm$^{-1}$ / 1181 cm$^{-1}$ [Willk. Einheit] | Absorbanzintegral 1027 cm$^{-1}$ bis 1087 cm$^{-1}$ [Willk. Einheit] |
|---|---|---|
| | Mittelwert -$\Delta q$0.05,+$\Delta q$0.95 | |
| Mucin / Becherzellen | 3.01 -1.48,+7.27 | 8.42 -2.24,+2.18 |
| Lamina muscularis, Lamina propria, Kolonenterozyten | 1.11 -0.47,+0.85 | 3.4 -1.20,+1.63 |
| Lamina propria | 1.33 -0.60,+0.71 | 5.90 -1.86,+1.70 |
| Kolon Epithelzellen | 1.47 -0.60,+0.82 | 8.40 -1.88,+2.59 |

(fortgesetzt)

| Biomedizinische Zuordnung | Absorbanzverhältnis 1079 cm$^{-1}$ / 1181 cm$^{-1}$ [Willk. Einheit] | Absorbanzintegral 1027 cm$^{-1}$ bis 1087 cm$^{-1}$ [Willk. Einheit] |
|---|---|---|
| | Mittelwert -$\Delta q$0.05,+$\Delta q$0.95 | |
| Kolon Epithelzellen, Epithelzellen in der Umgebung der Becherzellen | 1.13 -0.42, +0.57 | 10.32 -2.95,+3.46 |
| Schleimschicht im Lumen | 1.12 -0.30,+0.41 | 21.04 -5.03,+10.96 |
| Schleimschicht im Lumen | 1.07 -0.34,+0.48 | 14.38 -3.95,+4.81 |

**Referenzen**

M. C. Phillips and B.E. Bernacki, Hyperspectral microscopy of explosives particles using an external cavity quantum cascade laser, Opt. Eng. 52, 2013, 061302

K. Yeh, S. Kenkel, J.-N. Liu and R. Bhargava, Fast Infrared Chemical Imaging with a Quantum Cascade Laser, Anal. Chem. 87, 2015, pp 485-493

**Bezugszeichenliste**

1  IR Mikroskop
2  Probe
3  QCL
4  Sensor
5  Phasenmodulator
6  optisches Element
7  Wellenlängenreferenzierung
8  Probenhalter
9  Laserkontrolle
10  Aufnahmeeinheit
11  Log-in-Verstärker
12  Umlenkspiegel
20  Mikrobolometer FPA
21  IR transparente Streuscheibe (bewegt)
22  Linse zur Abbildung des Phasenmodulators auf die Probe
23  IR transparente Streulinse (unbewegt)
24  Strahlenteiler
25  IR reflektierender Streuspiegel (bewegt)
26  IR reflektierender Streuspiegel (unbewegt)
27  Linse zur Fokussierung der QCL Strahlung auf den rotierenden Phasenmodulator
28  Linse zur Fokussierung der von der Probe ausgehenden Strahlung auf den Detektor
29  Laserstrahlung
30  Kollektorlinse (Zink-Selenid, f = 25 mm)
31  Zink-Selenid Linse (f = 50 mm)
32  Kondensorlinse (Barium Fluorid f = 30/22,8 mm)
33  Aperturblende
34  Leuchtfeldblende

**Patentansprüche**

1. IR Mikroskop (1) zur molekülspektroskopischen Analyse einer Probe (2), mit einem Strahlengang aufweisend

   - mindestens einen Quantenkaskadenlaser (QCL) (3), der eine Infrarot (IR) Strahlung in Form eines Laserstahls emittiert,
   - einen Phasenmodulator (5), der zwischen dem QCL (3) und der Probe (2) angeordnet ist,
   - mindestens ein optisches Element (6), das zwischen dem Phasenmodulator (5) und der Probe (2) angeordnet ist, und
   - einen Sensor (4), der eine von der Probe (2) transmittierte und/oder reflektierte IR Strahlung detektiert,

   wobei der Phasenmodulator (5) eine rotierbare IR-transparente Streuscheibe (21) oder ein rotierbarer IR Strahlung reflektierender Streuspiegel (25) ist, wobei der Phasenmodulator (5) während der Analyse kontinuierlich rotiert, **dadurch gekennzeichnet, dass** der Phasenmodulator (5) derart im Strahlengang des IR Mikroskops (1) angeordnet ist, dass keine am Zentrum des Phasenmodulators (5) gestreute IR Strahlung auf die Probe (2) trifft, wobei der Durchmesser des Laserstrahls am Punkt des Auftreffens auf den Phasenmodulator (5) 80 % oder weniger, insbesondere 70 % oder weniger des Radius des Phasenmodulators (5) beträgt, wobei der Phasenmodulator (5) mit einer Rotationsrate (n) rotiert, die mindestens 20% höher als eine Bildrate des Sensors (4) ist, und wobei die Rotationsrate (n) des Phasenmodulators (5) kein ganz- oder halbzahliges Vielfaches der Bildrate des Sensors (4) ist.

2. IR Mikroskop (1) nach Anspruch 1, **dadurch gekennzeichnet, dass** der Phasenmodulator (5) derart im Strahlengang des Mikroskops (1) angeordnet ist, dass das Zentrum des Phasenmodulators (5) von der IR Strahlung nicht erfasst wird.

3. IR Mikroskop (1) nach Anspruch 1 oder 2, **dadurch gekennzeichnet, dass** der QCL (3) ein QCL (3) in einer externen Kavität (EC-QCL) ist.

4. IR Mikroskop (1) nach einem der vorhergehenden Ansprüche, **dadurch gekennzeichnet, dass** der QCL (3) während der Analyse kontinuierlich durchgestimmt wird.

5. IR Mikroskop (1) nach einem der vorhergehenden Ansprüche, **dadurch gekennzeichnet, dass** der QCL (3) während der Analyse mit einer Geschwindigkeit von 5 cm$^{-1}$/s bis 30 cm$^{-1}$/s, bevorzugt von 10 cm$^{-1}$/s bis 20 cm$^{-1}$/s, ferner bevorzugt von etwa 10 cm$^{-1}$/s durchgestimmt wird.

6. IR Mikroskop (1) nach einem der vorhergehenden Ansprüche, **dadurch gekennzeichnet, dass** der Sensor (4) ein thermischer Sensor, bevorzugt ein Mikrobolometer (20) ist.

7. IR Mikroskop (1) nach einem der vorhergehenden Ansprüche, ferner aufweisend einen zweiten statischen Phasenmodulator.

8. Verfahren zum molekülspektroskopischen Analysieren einer Probe (2) mit einem IR Mikroskop (1), umfassend die Schritte

   - Bestrahlen der Probe (2) mit einer Infrarot (IR) Strahlung n Form eines Laserstahls mittels eines Quantenkaskadenlasers (QCL) (3), wobei die IR Strahlung über einen Phasenmodulator (5) und mindestens ein optisches Element (6) auf die Probe (2) gelenkt wird, und
   - Detektieren der von der Probe (2) reflektierten und/oder transmittierten IR Strahlung,

   wobei der Phasenmodulator (5) eine rotierbare IR-transparente Streuscheibe (21) oder ein rotierbarer IR Strahlung reflektierender Streuspiegel (25) ist, wobei der Phasenmodulator (5) während des Detektierens kontinuierlich rotiert wird und, **dadurch gekennzeichnet, dass** der Phasenmodulator (5) derart im Strahlengang des IR-Mikrokops (1) angeordnet ist, dass keine am Zentrum des Phasenmodulators (5) gestreute IR Strahlung auf die Probe (2) gelenkt wird, wobei der Durchmesser des Laserstrahls am Punkt des Auftreffens auf den Phasenmodulator (5) 80 % oder weniger, insbesondere 70 % oder weniger des Radius des Phasenmodulators (5) beträgt, wobei der Phasenmodulator (5) mit einer Rate rotiert, die mindestens 20% höher als eine Bildrate des Sensors (4) ist, und wobei die Rotationsrate (n) des Phasenmodulators (5) kein ganz- oder halbzahliges Vielfaches der Bildrate des Sensors (4) ist.

9. Verfahren nach Anspruch 8, **dadurch gekennzeichnet, dass** das Zentrum des Phasenmodulators (5) von der IR Strahlung nicht erfasst wird.

10. Verfahren nach Anspruch 8 oder 9, **dadurch gekennzeichnet, dass** mindestens 2, bevorzugt 2 bis 10, ferner bevorzugt 2 bis 6, ferner bevorzugt 2 bis 4 unterschiedliche Wellenlängen der transmittierten und/oder reflektierten IR Strahlung detektiert werden.

11. Verfahren nach einem der Ansprüche 8 bis 10, **dadurch gekennzeichnet, dass** die IR Strahlung mit einer spektralen Auflösung von 1 cm$^{-1}$ bis 8 cm$^{-1}$, bevorzugt von 2 cm$^{-1}$ bis 8 cm$^{-1}$, ferner bevorzugt von 4 cm$^{-1}$ bis 8 cm$^{-1}$ detektiert wird.

**Claims**

1. IR microscope (1) for analyzing a sample (2) by molecular spectroscopy, comprising a beam path having

      - at least one quantum cascade laser (QCL) (3), which emits infrared (IR) radiation in the form of a laser beam,
      - a phase modulator (5) arranged between the QCL (3) and the sample (2),
      - at least one optical element (6) arranged between the phase modulator (5) and the sample (2), and
      - a sensor (4) which detects IR radiation transmitted and/or reflected by the sample (2),

   the phase modulator (5) being a rotatable IR-transparent diffuser (21) or a rotatable diffusing mirror (25) that reflects IR radiation, the phase modulator (5) continually rotating during the analysis, **characterized in that** the phase modulator (5) is arranged in the beam path of the IR microscope (1) such that no IR radiation scattered at the center of the phase modulator (5) impinges on the sample (2), the diameter of the laser beam at the point of impingement on the phase modulator (5) being 80% or less, in particular 70% or less, than the radius of the phase modulator (5), the phase modulator (5) rotating at a rate of rotation (n) that is at least 20% greater than a frame rate of the sensor (4), and the rate of rotation (n) of the phase modulator (5) not being an integral or half-integral multiple of the frame rate of the sensor (4).

2. IR microscope (1) according to claim 1, **characterized in that** the phase modulator (5) is arranged in the beam path of the microscope (1) such that the center of the phase modulator (5) is not covered by the IR radiation.

3. IR microscope (1) according to claim 1 or claim 2, **characterized in that** the QCL (3) is a QCL (3) in an external cavity (EC-QCL).

4. IR microscope (1) according to any of the preceding claims, **characterized in that** the QCL (3) is continually tuned during the analysis.

5. IR microscope (1) according to any of the preceding claims, **characterized in that** the QCL (3) is tuned during the analysis at a rate of 5 cm$^{-1}$/s to 30 cm$^{-1}$/s, preferably 10 cm$^{-1}$/s to 20 cm$^{-1}$/s, further preferably of approximately 10 cm$^{-1}$/s.

6. IR microscope (1) according to any of the preceding claims, **characterized in that** the sensor (4) is a thermal sensor, preferably a microbolometer (20).

7. IR microscope (1) according to any of the preceding claims, further comprising a second static phase modulator.

8. Method for analyzing a sample (2) by molecular spectroscopy using an IR microscope (1), comprising the steps of

      - irradiating the sample (2) with infrared (IR) radiation in the form of a laser beam by means of a quantum cascade laser (QCL) (3), the IR radiation being directed onto the sample (2) by means of a phase modulator (5) and at least one optical element (6), and
      - detecting the IR radiation reflected and/or transmitted by the sample (2),

   the phase modulator (5) being a rotatable IR-transparent diffuser (21) or a rotatable diffusing mirror (25) that reflects IR radiation, the phase modulator (5) continually rotating during the detection, **characterized in that** the phase modulator (5) is arranged in the beam path of the IR microscope (1) such that no IR radiation scattered at the center of the phase modulator (5) is directed onto the sample (2), the diameter of the laser beam at the point of impingement on the phase modulator (5) being 80% or less, in particular 70% or less, than the radius of the phase modulator (5), the phase modulator (5) rotating at a rate that is at least 20% greater than a frame rate of the sensor (4), and the rate of rotation (n) of the phase modulator (5) not being an integral or half-integral multiple of the frame rate of the sensor (4).

9. Method according to claim 8, **characterized in that** the center of the phase modulator (5) is not covered by the IR radiation.

10. Method according to claim 8 or claim 9, **characterized in that** at least 2, preferably 2 to 10, further preferably 2 to 6, further preferably 2 to 4, different wavelengths of the transmitted and/or reflected IR radiation are detected.

11. Method according to any of claims 8 to 10, **characterized in that** the IR radiation is detected at a spectral resolution of 1 cm$^{-1}$ to 8 cm$^{-1}$, preferably 2 cm$^{-1}$ to 8 cm$^{-1}$, further preferably 4 cm$^{-1}$ to 8 cm$^{-1}$.

**Revendications**

1. Microscope IR (1) pour l'analyse spectroscopique moléculaire d'un échantillon (2), avec un trajet du faisceau comprenant

   - au moins un laser à cascade quantique (LCQ) (3) émettant un rayonnement infrarouge (IR) sous forme d'un faisceau laser
   - un modulateur de phase (5), disposé entre le LCQ (3) et l'échantillon (2),
   - au moins un élément optique (6), disposé entre le modulateur de phase (5) et l'échantillon (2), et
   - un capteur (4) détectant le rayonnement IR transmis et/ou réfléchi par l'échantillon (2),

   le modulateur de phase (5) étant un disque diffuseur transparent aux IR rotatif (21) ou un miroir diffuseur réfléchissant les IR rotatif (25), le modulateur de phase (5) tournant en continu pendant l'analyse, **caractérisé en ce que** le modulateur de phase (5) est disposé dans le trajet du faisceau du microscope IR (1) de manière à ce qu'aucun rayonnement IR diffusé au centre du modulateur de phase (5) ne frappe l'échantillon (2), le diamètre du rayon laser au point d'impact sur le modulateur de phase (5) étant égal ou inférieur à 80 %, notamment égal ou inférieur à 70 %, du rayon du modulateur de phase (5), le modulateur de phase (5) tournant à une vitesse de rotation (n) d'au moins 20 % supérieure à la fréquence d'images du capteur (4) et la vitesse de rotation (n) du modulateur de phase (5) n'étant pas un multiple entier ou demi-entier de la fréquence d'images du capteur (4).

2. Microscope IR (1) selon la revendication 1, **caractérisé en ce que** le modulateur de phase (5) est disposé dans le trajet du faisceau du microscope (1) de manière à ce que le centre du modulateur de phase (5) ne soit pas détecté par le rayonnement IR.

3. Microscope IR (1) selon les revendications 1 ou 2, **caractérisé en ce que** le LCQ (3) est un LCQ (3) dans une cavité externe (CE-LCQ).

4. Microscope IR (1) selon l'une des revendications précédentes, **caractérisé en ce que** le LCQ (3) est syntonisé en continu pendant l'analyse.

5. Microscope IR (1) selon l'une des revendications précédentes, **caractérisé en ce que** le LCQ (3) est syntonisé pendant l'analyse à une vitesse comprise entre 5 cm$^{-1}$/s et 30 cm$^{-1}$/s, préférablement entre 10 cm$^{-1}$/s et 20 cm$^{-1}$/s, plus préférablement d'environ 10 cm$^{-1}$/s.

6. Microscope IR (1) selon l'une des revendications précédentes, **caractérisé en ce que** le capteur (4) est un capteur thermique, préférablement un microbolomètre (20).

7. Microscope IR (1) selon l'une des revendications précédentes, comprenant également un deuxième modulateur de phase statique.

8. Procédé d'analyse d'un échantillon (2) par spectroscopie moléculaire avec un microscope IR (1), comprenant les étapes de

   - irradier l'échantillon (2) avec un rayonnement infrarouge (IR) sous forme d'un faisceau laser au moyen d'un laser à cascade quantique (LCQ) (3), en dirigeant le rayonnement IR sur l'échantillon (2) à travers un modulateur de phase (5) et au moins un élément optique (6), et

- détecter le rayonnement IR réfléchi et/ou transmis par l'échantillon (2),

le modulateur de phase (5) étant un disque diffuseur transparent aux IR rotatif (21) ou un miroir diffuseur réfléchissant les IR rotatif (25), le modulateur de phase (5) étant tourné en continu pendant la détection, et **caractérisé en ce que** le modulateur de phase (5) est disposé dans le trajet du faisceau du microscope IR (1) de manière à ce qu'aucun rayonnement IR diffusé au centre du modulateur de phase (5) ne soit dirigé sur l'échantillon (2), le diamètre du rayon laser au point d'impact sur le modulateur de phase (5) étant égal ou inférieur à 80 %, notamment égal ou inférieur à 70 %, du rayon du modulateur de phase (5), le modulateur de phase (5) tournant à une vitesse d'au moins 20 % supérieure à la fréquence d'images du capteur (4) et la vitesse de rotation (n) du modulateur de phase (5) n'étant pas un multiple entier ou demi-entier de la fréquence d'images du capteur (4).

9. Procédé selon la revendication 8, **caractérisé en ce que** le centre du modulateur de phase (5) n'est pas détecté par le rayonnement IR.

10. Procédé selon les revendications 8 ou 9, **caractérisé en ce que** l'on détecte au moins 2, préférablement 2 à 10, plus préférablement 2 à 6, plus préférablement 2 à 4 longueurs d'onde différentes du rayonnement IR transmis et/ou réfléchi.

11. Procédé selon l'une des revendications 8 à 10, **caractérisé en ce que** le rayonnement IR est détecté avec une résolution spectrale de 1 cm$^{-1}$ à 8 cm$^{-1}$, préférablement de 2 cm$^{-1}$ à 8 cm$^{-1}$, plus préférablement de 4 cm$^{-1}$ à 8 cm$^{-1}$.

Figur 1

Figur 2

Figur 2 (fortgesetzt)

G

H

Figur 2 (fortgesetzt)

Figur 2 (fortgesetzt)

Figur 2 (fortgesetzt)

A

Figur 3

Figur 3 (fortgesetzt)

Figur 4

Figur 5

spektrale Standardabweichung

Figur 6

Figur 7

Figur 8

34

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2018210873 A1
- JP 2007233371 A

**In der Beschreibung aufgeführte Nicht-Patentliteratur**

- **KOLE, M et al.** Discrete Frequency Infrared Microspectroscopy and Imaging with a Tunable Quantum Cascade Laser. *Anal. Chem.,* 2012, vol. 84, 10366-10372
- **LOWENTHAL, S. et al.** Speckle removal by a slowly moving diffuser associated with a motionless diffuser. *Journal of the optical society of America, American Institue of Physics, New York; US,* 01. Juli 1971, vol. 61 (7), 847-851
- **FRANK FUCHS.** Image stand-off detection of explosives using tunable MIR quantum cascade laser. *Optical Sensing II,* 23. Januar 2010, vol. 7608, 750809
- **M. C. PHILLIPS ; B.E. BERNACKI.** Hyperspectral microscopy of explosives particles using an external cavity quantum cascade laser. *Opt. Eng.,* 2013, vol. 52, 061302
- **K. YEH ; S. KENKEL ; J.-N. LIU ; R. BHARGAVA.** Fast Infrared Chemical Imaging with a Quantum Cascade Laser. *Anal. Chem.,* 2015, vol. 87, 485-493